# EUROPEAN PATENT APPLICATION

(11) **EP 4 554 296 A1**
(43) Date of publication of application: **14.05.2025**
(21) Application number: 24205202.5
(22) Date of filing: 08.10.2024
(51) Int. Cl.: H04W 64/00, H04W 76/19, H04W 76/30, G01S 19/01

(54) **HANDLING POSITIONING MEASUREMENT**

(30) Priority: 07.11.2023 WO PCT/CN2023/130310
(71) Applicant: Nokia Technologies Oy, 02610 Espoo (FI)
(72) Inventor: LAURIDSEN, Mads, Gistrup (DK); YUAN, Ping, Beijing (CN); SUN, Jing Yuan, Beijing (CN); SELVAGANAPATHY, Srinivasan, Bangalore (IN)
(74) Representative: Nokia EPO representatives

(57) **Abstract**

Example embodiments of the present disclosure relate to a solution for handling positioning measurement. In this solution, a first apparatus may determine a relationship between a completion time of a positioning measurement and an availability time of a serving cell of the first apparatus, or a first time length of a duration for performing the positioning measurement and a second time length of a validity duration of an uplink synchronization parameter in the serving cell. Then based on the determined relationship, the mobility activities may be processed properly.

## Description

### FIELD

Various example embodiments of the present disclosure generally relate to the field of telecommunication and in particular, to methods, devices, apparatuses and computer readable storage medium for handling positioning measurement.

### BACKGROUND

In new radio (NR) non terrestrial network (NTN), it is assumed that user equipment (UE) always has capability of global navigation satellite system (GNSS) measurement and will achieve its location according to the measured GNSS information. In the following, more works about supporting internet of things (IoT) over non-terrestrial network (NTN) will be discussed. The 3rd generation partnership project (3GPP) assumes that the UE cannot operate GNSS and IoT NTN simultaneously and therefore radio access network work group 1 (RAN1) and RAN WG2 (RAN2) specify the GNSS measurement gaps, where the UE can perform the GNSS measurement without monitoring the physical downlink control channel (PDCCH) and performing other "3GPP tasks".

### SUMMARY

In a first aspect of the present disclosure, there is provided a first apparatus. The first apparatus comprises at least one processor; and at least one memory storing instructions that, when executed by the at least one processor, cause the first apparatus to: determine a relationship between at least one of the following: a completion time of a positioning measurement and an availability time of a serving cell of the first apparatus, or a first time length of a duration for performing the positioning measurement and a second time length of a validity duration of an uplink synchronization parameter in the serving cell, the first time length being shorter than a third time length of the positioning measurement gap; upon a completion of the positioning measurement, perform, based on the relationship, at least one of the following: skipping a radio link failure (RLF) procedure in the serving cell; performing a re-establishment procedure with a target cell; performing a cell re-selection procedure; stopping at least one access stratum (AS) operation which has been suspended due to performing the positioning measurement; performing a mobility-related procedure; starting to perform at least one mobility or positioning reference signal (PRS) measurement, a duration for performing the at least one mobility or PRS measurement being at least partially overlapped with the duration for performing the positioning measurement; or resuming the at least one AS operation which has been suspended due to performing the positioning measurement.

In a second aspect of the present disclosure, there is provided a second apparatus. The second apparatus comprises at least one processor; and at least one memory storing instructions that, when executed by the at least one processor, cause the second apparatus to: determine a relationship between at least one of the following: a completion time at which a first apparatus completes a positioning measurement and an availability time of a serving cell of the first apparatus provided by the second apparatus, or a first time length of a duration for performing the positioning measurement by the first apparatus and a second time length of a validity duration of an uplink synchronization parameter in the serving cell; in accordance with an expectation that the first apparatus has completed the positioning measurement, perform, based on the relationship, at least one of the following: stopping at least one access stratum (AS) operation which has been suspended due to performing the positioning measurement; resuming the at least one AS operation which has been suspended due to performing the positioning measurement; or starting to assist the first apparatus to perform at least one mobility or positioning reference signal (PRS) measurement, a duration for performing the at least one mobility or PRS measurement being at least partially overlapped with the duration for performing the positioning measurement.

In a third aspect of the present disclosure, there is provided a first apparatus. The first apparatus comprises at least one processor; and at least one memory storing instructions that, when executed by the at least one processor, cause the first apparatus to: receive, from a second apparatus, a fourth message to release the first apparatus to an idle state, the fourth message indicating at least one of the following: a positioning-related cause indicating the first apparatus to perform a positioning measurement, or a target or candidate cell for the first apparatus; and upon a reception of the fourth message, transition in the idle state.

In a fourth aspect of the present disclosure, there is provided a second apparatus. The second apparatus comprises at least one processor; and at least one memory storing instructions that, when executed by the at least one processor, cause the second apparatus to: determine a relationship between at least one of the following: a completion time of a positioning measurement and an availability time of a serving cell a first apparatus, or a first time length of the positioning measurement and a second time length of a validity duration of an uplink synchronization parameter in the serving cell; transmit a fourth message to release the first apparatus to an idle state in accordance with at least one of the following: a determination that the completion time of the positioning measurement is later than or equal to the availability time of the serving, or a determination that the first time length is equal to or longer than the second time length.

In a fifth aspect of the present disclosure, there is provided a first apparatus. The first apparatus comprises at least one processor; and at least one memory storing instructions that, when executed by the at least one processor, cause the first apparatus to: receive, from a second apparatus, a conditional handover (CHO) configuration of a candidate cell; perform a positioning measurement which conflicts with a CHO execution evaluation on the candidate cell; and start the CHO execution evaluation after a completion of the positioning measurement or an end of a positioning measurement gap of the positioning measurement.

In a sixth aspect of the present disclosure, there is provided a second apparatus. The second apparatus comprises at least one processor; and at least one memory storing instructions that, when executed by the at least one processor, cause the second apparatus to: transmit, to a first apparatus, a conditional handover (CHO) configuration of a candidate cell; and in accordance with a determination that a positioning measurement at the first apparatus conflicts with a CHO execution evaluation on the candidate cell, transmit, a fourth message to the candidate cell, the fourth message indicating the candidate cell to shift resources to be used for performing a CHO on the candidate cell.

In a seventh aspect of the present disclosure, there is provided a third apparatus. The third apparatus comprises at least one processor; and at least one memory storing instructions that, when executed by the at least one processor, cause the third apparatus to: determine, resources to be used by a first apparatus for performing a conditional handover (CHO) on a candidate cell provided by the third apparatus; and receive a fifth message from a second apparatus serving the first apparatus, the fifth message indicating the candidate cell to shift the resources to be used for performing the CHO on the candidate cell.

In an eighth aspect of the present disclosure, there is provided a first apparatus. The first apparatus comprises at least one processor; and at least one memory storing instructions that, when executed by the at least one processor, cause the first apparatus to: receive, from a second apparatus, a connected discontinuous reception (C-DRX) configuration indicating at least one active duration; and in response to at least one active duration being overlapped with a positioning measurement gap, wake up to monitor control information at an end of the measurement gap, the control information indicating at least one pending transmission of the first apparatus.

In a ninth aspect of the present disclosure, there is provided a second apparatus. The second apparatus comprises at least one processor; and at least one memory storing instructions that, when executed by the at least one processor, cause the second apparatus to: transmit, to a first apparatus, a connected discontinuous reception (C-DRX) configuration indicating at least one active duration; in response to an active duration of the at least one active duration being overlapped with a positioning measurement gap, transmit control information indicating at least one pending transmission of the first apparatus at an end of a measurement gap of the positioning measurement.

In a tenth aspect of the present disclosure, there is provided a first apparatus. The first apparatus comprises at least one processor; and at least one memory storing instructions that, when executed by the at least one processor, cause the first apparatus to: receive, from a second apparatus, a measurement configuration used for configuring a mobility measurement on a neighbor cell; perform a positioning measurement which conflicts with the mobility measurement on the neighbor cell; and relax a requirement of the mobility measurement on the neighbor cell.

In an eleventh aspect of the present disclosure, there is provided a method. The method comprises: determining, at a first apparatus, a relationship between at least one of the following: a completion time of a positioning measurement and an availability time of a serving cell of the first apparatus, or a first time length of a duration for performing the positioning measurement and a second time length of a validity duration of an uplink synchronization parameter in the serving cell, the first time length being shorter than a third time length of the positioning measurement gap; upon a completion of the positioning measurement, performing, based on the relationship, at least one of the following: skipping a radio link failure (RLF) procedure in the serving cell; performing a re-establishment procedure with a target cell; performing a cell re-selection procedure; stopping at least one access stratum (AS) operation which has been suspended due to performing the positioning measurement; performing a mobility-related procedure; starting to perform at least one mobility or positioning reference signal (PRS) measurement, a duration for performing the at least one mobility or PRS measurement being at least partially overlapped with the duration for performing the positioning measurement; or resuming the at least one AS operation which has been suspended due to performing the positioning measurement.

In a twelfth aspect of the present disclosure, there is provided a method. The method comprises: determining, at a second apparatus, a relationship between at least one of the following: a completion time at which a first apparatus completes a positioning measurement and an availability time of a serving cell of the first apparatus provided by the second apparatus, or a first time length of a duration for performing the positioning measurement by the first apparatus and a second time length of a validity duration of an uplink synchronization parameter in the serving cell; in accordance with an expectation that the first apparatus has completed the positioning measurement, performing, based on the relationship, at least one of the following: stopping at least one access stratum (AS) operation which has been suspended due to performing the positioning measurement; resuming the at least one AS operation which has been suspended due to performing the positioning measurement; or starting to assist the first apparatus to perform at least one mobility or positioning reference signal (PRS) measurement, a duration for performing the at least one mobility or PRS measurement being at least partially overlapped with the duration for performing the positioning measurement.

In a thirteenth aspect of the present disclosure, there is provided a method. The method comprises: receiving, at a first apparatus and from a second apparatus, a fourth message to release the first apparatus to an idle state, the fourth message indicating at least one of the following: a positioning-related cause indicating the first apparatus to perform a positioning measurement, or a target or candidate cell for the first apparatus; and upon a reception of the fourth message, transitioning in the idle state.

In a fourteenth aspect of the present disclosure, there is provided a method. The method comprises: determining, at a second apparatus, a relationship between at least one of the following: a completion time of a positioning measurement and an availability time of a serving cell a first apparatus, or a first time length of the positioning measurement and a second time length of a validity duration of an uplink synchronization parameter in the serving cell; transmitting a fourth message to release the first apparatus to an idle state in accordance with at least one of the following: a determination that the completion time of the positioning measurement is later than or equal to the availability time of the serving, or a determination that the first time length is equal to or longer than the second time length.

In a fifteenth aspect of the present disclosure, there is provided a method. The method comprises: receiving, at a first apparatus and from a second apparatus, a conditional handover (CHO) configuration of a candidate cell; performing a positioning measurement which conflicts with a CHO execution evaluation on the candidate cell; and starting the CHO execution evaluation after a completion of the positioning measurement or an end of a positioning measurement gap of the positioning measurement.

In a sixteenth aspect of the present disclosure, there is provided a method. The method comprises: transmitting, at a second apparatus and to a first apparatus, a conditional handover (CHO) configuration of a candidate cell; and in accordance with a determination that a positioning measurement at the first apparatus conflicts with a CHO execution evaluation on the candidate cell, transmitting, a fourth message to the candidate cell, the fourth message indicating the candidate cell to shift resources to be used for performing a CHO on the candidate cell.

In a seventeenth aspect of the present disclosure, there is provided a method. The method comprises: determining, at a third apparatus, resources to be used by a first apparatus for performing a conditional handover (CHO) on a candidate cell provided by the third apparatus; and receiving a fifth message from a second apparatus serving the first apparatus, the fifth message indicating the candidate cell to shift the resources to be used for performing the CHO on the candidate cell.

In an eighteenth aspect of the present disclosure, there is provided a method. The method comprises: receiving, at a first apparatus and from a second apparatus, a connected discontinuous reception (C-DRX) configuration indicating at least one active duration; and in response to at least one active duration being overlapped with a positioning measurement gap, waking up to monitor control information at an end of the measurement gap, the control information indicating at least one pending transmission of the first apparatus.

In a nineteenth aspect of the present disclosure, there is provided a method. The method comprises: transmitting, at a second apparatus and to a first apparatus, a connected discontinuous reception (C-DRX) configuration indicating at least one active duration; in response to an active duration of the at least one active duration being overlapped with a positioning measurement gap, transmitting control information indicating at least one pending transmission of the first apparatus at an end of a measurement gap of the positioning measurement.

In a twentieth aspect of the present disclosure, there is provided a method. The method comprises: receiving, at a first apparatus and from a second apparatus, a measurement configuration used for configuring a mobility measurement on a neighbor cell; performing a positioning measurement which conflicts with the mobility measurement on the neighbor cell; and relaxing a requirement of the mobility measurement on the neighbor cell.

In a twenty-first aspect of the present disclosure, there is provided a first apparatus. The first apparatus comprises means for determining a relationship between at least one of the following: a completion time of a positioning measurement and an availability time of a serving cell of the first apparatus, or a first time length of a duration for performing the positioning measurement and a second time length of a validity duration of an uplink synchronization parameter in the serving cell, the first time length being shorter than a third time length of the positioning measurement gap; means for upon a completion of the positioning measurement, performing, based on the relationship, at least one of the following: skipping a radio link failure (RLF) procedure in the serving cell; performing a re-establishment procedure with a target cell; performing a cell re-selection procedure; stopping at least one access stratum (AS) operation which has been suspended due to performing the positioning measurement; performing a mobility-related procedure; starting to perform at least one mobility or positioning reference signal (PRS) measurement, a duration for performing the at least one mobility or PRS measurement being at least partially overlapped with the duration for performing the positioning measurement; or resuming the at least one AS operation which has been suspended due to performing the positioning measurement.

In a twenty-second aspect of the present disclosure, there is provided a second apparatus. The second apparatus comprises means for determining a relationship between at least one of the following: a completion time at which a first apparatus completes a positioning measurement and an availability time of a serving cell of the first apparatus provided by the second apparatus, or a first time length of a duration for performing the positioning measurement by the first apparatus and a second time length of a validity duration of an uplink synchronization parameter in the serving cell; means for in accordance with an expectation that the first apparatus has completed the positioning measurement, performing, based on the relationship, at least one of the following: stopping at least one access stratum (AS) operation which has been suspended due to performing the positioning measurement; resuming the at least one AS operation which has been suspended due to performing the positioning measurement; or starting to assist the first apparatus to perform at least one mobility or positioning reference signal (PRS) measurement, a duration for performing the at least one mobility or PRS measurement being at least partially overlapped with the duration for performing the positioning measurement.

In a twenty-third aspect of the present disclosure, there is provided a first apparatus. The first apparatus comprises means for receiving, from a second apparatus, a fourth message to release the first apparatus to an idle state, the fourth message indicating at least one of the following: a positioning-related cause indicating the first apparatus to perform a positioning measurement, or a target or candidate cell for the first apparatus; and means for upon a reception of the fourth message, transitioning in the idle state.

In a twenty-fourth aspect of the present disclosure, there is provided a second apparatus. The second apparatus comprises means for determining a relationship between at least one of the following: a completion time of a positioning measurement and an availability time of a serving cell a first apparatus, or a first time length of the positioning measurement and a second time length of a validity duration of an uplink synchronization parameter in the serving cell; means for transmitting a fourth message to release the first apparatus to an idle state in accordance with at least one of the following: a determination that the completion time of the positioning measurement is later than or equal to the availability time of the serving, or a determination that the first time length is equal to or longer than the second time length.

In a twenty-fifth aspect of the present disclosure, there is provided a first apparatus. The first apparatus comprises means for receiving, from a second apparatus, a conditional handover (CHO) configuration of a candidate cell; means for performing a positioning measurement which conflicts with a CHO execution evaluation on the candidate cell; and means for starting the CHO execution evaluation after a completion of the positioning measurement or an end of a positioning measurement gap of the positioning measurement.

In a twenty-sixth aspect of the present disclosure, there is provided a second apparatus. The second apparatus comprises means for transmitting, to a first apparatus, a conditional handover (CHO) configuration of a candidate cell; and means for in accordance with a determination that a positioning measurement at the first apparatus conflicts with a CHO execution evaluation on the candidate cell, transmitting, a fourth message to the candidate cell, the fourth message indicating the candidate cell to shift resources to be used for performing a CHO on the candidate cell.

In a twenty-seventh aspect of the present disclosure, there is provided a third apparatus. The third apparatus comprises means for determining, resources to be used by a first apparatus for performing a conditional handover (CHO) on a candidate cell provided by the third apparatus; and means for receiving a fifth message from a second apparatus serving the first apparatus, the fifth message indicating the candidate cell to shift the resources to be used for performing the CHO on the candidate cell.

In a twenty-eighth aspect of the present disclosure, there is provided a first apparatus. The first apparatus comprises means for receiving, from a second apparatus, a connected discontinuous reception (C-DRX) configuration indicating at least one active duration; and means for in response to at least one active duration being overlapped with a positioning measurement gap, waking up to monitor control information at an end of the measurement gap, the control information indicating at least one pending transmission of the first apparatus.

In a twenty-ninth aspect of the present disclosure, there is provided a second apparatus. The second apparatus comprises means for transmitting, to a first apparatus, a connected discontinuous reception (C-DRX) configuration indicating at least one active duration; means for in response to an active duration of the at least one active duration being overlapped with a positioning measurement gap, transmitting control information indicating at least one pending transmission of the first apparatus at an end of a measurement gap of the positioning measurement.

In a thirtieth aspect of the present disclosure, there is provided a first apparatus. The first apparatus comprises means for receiving, from a second apparatus, a measurement configuration used for configuring a mobility measurement on a neighbor cell; means for performing a positioning measurement which conflicts with the mobility measurement on the neighbor cell; and means for relaxing a requirement of the mobility measurement on the neighbor cell.

In a thirty-first aspect of the present disclosure, there is provided a computer readable medium. The computer readable medium comprises instructions stored thereon for causing an apparatus to perform at least the method according to any of the eleventh aspect to the twentieth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates a signaling chart for communication according to some example embodiments of the present disclosure;
FIG. 3 illustrates another signaling chart for communication according to some example embodiments of the present disclosure;
FIG. 4 illustrates another signaling chart for communication according to some example embodiments of the present disclosure;
FIG. 5 illustrates another signaling chart for communication according to some example embodiments of the present disclosure;
FIG. 6 illustrates another signaling chart for communication according to some example embodiments of the present disclosure;
FIG. 7 illustrates a flowchart of a method implemented at a first apparatus according to some example embodiments of the present disclosure;
FIG. 8 illustrates a flowchart of a method implemented at a second apparatus device according to some example embodiments of the present disclosure;
FIG. 9 illustrates a flowchart of a method implemented at a first apparatus according to some example embodiments of the present disclosure;
FIG. 10 illustrates a flowchart of a method implemented at a second apparatus according to some example embodiments of the present disclosure;
FIG. 11 illustrates a flowchart of a method implemented at a first apparatus according to some example embodiments of the present disclosure;
FIG. 12 illustrates a flowchart of a method implemented at a second apparatus according to some example embodiments of the present disclosure;
FIG. 13 illustrates a flowchart of a method implemented at a third apparatus according to some example embodiments of the present disclosure;
FIG. 14 illustrates a flowchart of a method implemented at first apparatus according to some example embodiments of the present disclosure;
FIG. 15 illustrates a flowchart of a method implemented at a second apparatus according to some example embodiments of the present disclosure;
FIG. 16 illustrates a flowchart of a method implemented at a first apparatus according to some example embodiments of the present disclosure;
FIG. 17 illustrates a simplified block diagram of a device that is suitable for implementing example embodiments of the present disclosure; and
FIG. 18 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second" and the like may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT), enhanced machine type communication (eMTC) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

As discussed above, in NR NTN, IoT NTN or other types of NTN , it is assumed that the UE always has capability of GNSS measurement and will achieve its location according to the measured GNSS information.

In some example embodiments, the GNSS may be used by the UE to determine its location such that the UE can compensate for the radio propagation between the UE and the satellite. For geosynchronous orbits, the UE has to compensate for the propagation delay (covering ~36000 km), while for low earth orbit satellites the UE also has to compensate for Doppler and time shifts, which occur due to the satellite movement (~7.5 km/s relative to Earth).

In the present discourse, the GNSS measurement may be either triggered by the network device or the UE.

Specifically, in some example embodiments, the network device may trigger the UE to perform a GNSS measurement during a scheduled gap. Additionally, in some example embodiments, the network device may at least support to trigger the UE to perform GNSS measurement aperiodically. In case of the aperiodically trigger, the network device may use a (medium access control) MAC control element (CE) or a radio resource control (RRC) signaling to trigger the UE to perform the GNSS measurement. The triggering by the network device is expected to be based on the reported GNSS validity duration. In case that the UE is in connected mode, the UE may report GNSS validation duration with MAC CE. Additionally, in some example embodiments, the UE is also required to report the "GNSS position fix time duration" (i.e., the time required by the UE to perform the GNSS measurements) at least during the initial access stage. The parameter "GNSS position fix time duration" may be used by the network device to determine the GNSS measurement gap length. In some example embodiments, a new downlink MAC CE may be introduced to trigger connected UE to perform GNSS measurement.

In some example embodiments, for GNSS measurement in the radio resource control (RRC) connected, if the network device aperiodically triggers connected UE to make GNSS measurement, the UE may re-acquire GNSS position fix with a gap.

In some example embodiments, for the GNSS measurement gap aperiodically triggered with MAC CE, the duration for the GNSS measurement gap may be configured by eNB. Additionally, the gap duration is equal to the latest reported GNSS position fix time duration for measurement when the duration for GNSS measurement gap is not included in the configuration by eNB.

In some example embodiments, if the UE does not receive a trigger for GNSS measurement from the network device, the UE may autonomously perform the GNSS measurement. In this scenario, the network device and the UE should have a common understanding about when and how to start the GNSS measurement. As one specific embodiment, as the UE is not available for scheduling during the GNSS measurement period, the UE may autonomously perform the GNSS measurement at the expiry of the GNSS validity duration.

As one specific embodiment, as for the GNSS measurement in RRC connected, if the network device aperiodically triggers the UE which is in a connected state to perform the GNSS measurement. Further, when configured to enable autonomously triggering GNSS measurement, the UE may reacquire GNSS autonomously if the UE does not receive a trigger to perform the GNSS measurement from the network device.

In some example embodiments, from RAN1 perspective, at least for the case when frequency error and timing error are within frequency and timing error requirements with legacy closed loop time correction, the uplink transmission may be allowed in a duration X after original GNSS validity duration expires without GNSS re-acquisition.

In some example embodiments, the UE may be not required to transmit or receive any channel/signal within the aperiodic GNSS measurement gap duration before the UE reacquires GNSS successfully.

In some example embodiments, the UE may report one GNSS position fix time duration for GNSS measurement via a 4-bit field with component values [1, 2, 3, 4, 5, 6, 7, 13, 19, 25, 31, 6*n+1, ...,].

In some example embodiments, the GNSS validity duration that UE reports may be the remaining validity duration.

In some example embodiments, the UE may trigger the GNSS measurement reporting every time upon completing the GNSS fix operation.

In can be seen, the eNB may aperiodically trigger a GNSS measurement gap (MG) in which the UE can perform the measurement, and the trigger may be based on a downlink MAC CE and the network is free to decide when to trigger the GNSS measurement.

Further, the UE may autonomously reacquire the GNSS if the UE does not receive the aperiodic trigger and if the UE is configured with such autonomous GNSS MG configuration. In addition, the UE may report the remaining validity duration for the GNS S validity duration when completing the GNSS position fix operation. This enables the UE and eNB to have a common understanding of the UE's GNSS state i.e., when it is valid and when it is outdated.

As discussed above, the 3GPP assumes the UE cannot operate GNSS and IoT NTN simultaneously and therefore RAN1 and RAN2 specify GNSS measurement gaps, where the UE can perform the GNSS measurement without monitoring the physical downlink control channel (PDCCH) and performing other "3GPP tasks". Further, improved GNSS operations for a new position fix for the UE pre-compensation during long connection times and for reduced power consumption is expected to be studied and specified.

In some embodiments, the radio link management (RLM) may be suspended during the GNSS measurement gap while the UE is measuring GNSS. Further, the UE is not expected to acquire system information and GNSS position at the same time, acquisition of system information block 31 (SIB 31) may be postponed until GNSS measurement is completed if the UE cannot complete acquisition of SIB31 before the start of GNSS measurement gap.

In some example embodiments, some operations should be stopped/suspended when UE is measuring GNSS during the GNSS MG. Example operations include but are not limited to, *datalnactivityTimer* may be stopped, execution of conditional handover (CHO) may be postponed, RLM related timers may be stopped (such as, the timers related to RLF and re-establishment (e.g., T310, T311, and T301) should be suspended; T310 may be paused; T310 may be extended); time alignment timer (TAT) handling may be suspended/stopped (such as, *timeAlignmentTimer* expired, TAT suspended); avoid unnecessary neighbour cell measurement during the time duration of GNSS measurement; random access channel (RACH)/scheduling request (SR)/buffer status reporting (BSR) may be suspended.

So far, though some discussions and agreements about the UE/network behaviors have been made, there are still many pending issues needed to be further discussed. For example, it has been reached an agreement that some AS operations should be suspended when the UE is performing GNSS measurement during the GNSS measurement gap. However, there was no discussion on whether the suspended AS operations should be resumed when the UE completed the GNSS measurement.

Another pending issue is that it has been agreed that the RLM is suspended during the GNSS MG, but it does not define the impact on RRM measurements and furthermore it does not define how the UE shall "recover" from the missing RLM measurements. A further pending issue is there is no discussions about the RRM measurements that collides with the GNSS MG.

Moreover, it has been agreed that the UE is not required to transmit or receive within the GNSS measurement gap and that the GNSS position fix time duration, which the network uses to configure the GNSS measurement gap, is in the range [1, 2, 3, 4, 5, 6, 7, 13, 19, 25, 31, 6*n+1, ...,] seconds. This means that the UE is not able to perform any RLM and RRM measurements for a very long period (up to 31 seconds or even more). In this event, the normal mobility activities may be influenced. Furthermore, for the suspended AS operations when the UE is performing GNSS measurement during the GNSS MG, it is not clear whether the AS operation should be resumed/continued when the UE completes the GNSS measurement.

In view of this, how to stipulate the behavior of the terminal device and the network device during the GNSS measurement gap is desirable to be discussed.

According to some example embodiments of the present disclosure, there is provided a solution for stipulating the behavior of a terminal device and a network device in discontinuous coverage. In this solution, a first apparatus (such as, a terminal device) may determine a relationship between a completion time of a positioning measurement (such as, a GNSS measurement or a positioning measurement based on 3GPP signaling) and an availability time of a serving cell of the first apparatus, or a first time length of a duration for performing the positioning measurement and a second time length of a validity duration of an uplink synchronization parameter in the serving cell. Then based on the determined relationship, the RRM/RLM/AS activities may be processed properly.

In summary, as the RRM/RLM/AS activities may be defined upon the GNSS measurement completion, unnecessary power consumption may be avoided and the interruption of the communication may be minimized.

It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

As used herein, the terms "serving coverage", "serving cell", "serving area", "source cell", "source network", "serving satellite", "serving network", "serving gNB", "serving eNB" may be used interchangeably.

As used herein, the terms "candidate cell/network", "target cell/network", "neighbor cell/network" may be used interchangeably.

As used herein, the terms "gap", "duration", "period", "cycle", "time length", "window" may be used interchangeably.

In the following, a satellite will be used as an example of a network device for describing some specific example embodiments of the present disclosure. It is noted that example embodiments described with regard to the satellite are equally applicable to other type network device. The present disclosure is not limited in this regard.

### Example Environment

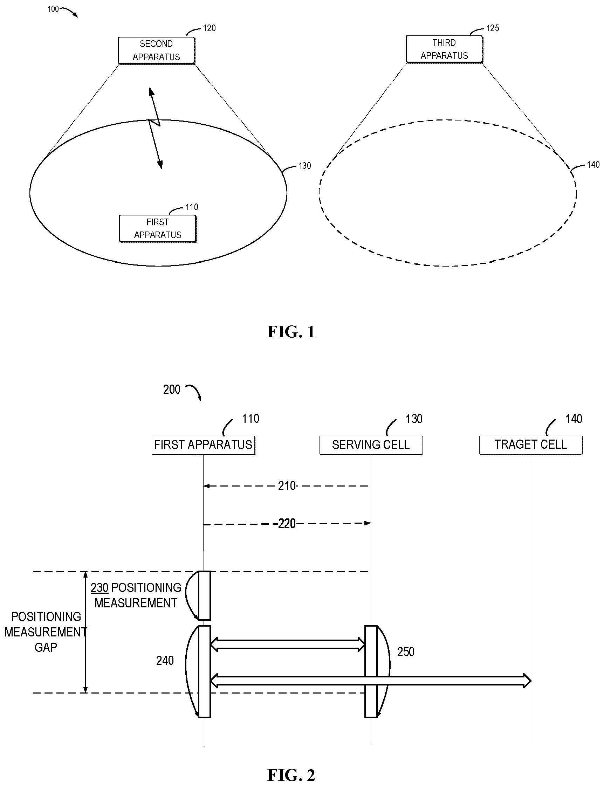

FIG. 1 illustrates an example communication environment 100 in which example embodiments of the present disclosure can be implemented. In the communication environment 100, a plurality of communication devices, including a first apparatus 110 and a second apparatus 120, can communicate with each other.

In the example of FIG. 1, the first apparatus 110 may include a terminal device and the second apparatus 120 may include a network device serving the terminal device. The serving area of the second apparatus 120 may be called a cell 130. It should be understood that the second apparatus 120 may be deployed within or out of the cell 130 according to different requirement scenarios.

In some example embodiments, the communication environment 100 is an NTN network including one or more satellites. In some example embodiments, an access network device (such as, a gNB) may be deployed at a satellite, also referred to as a regenerative architecture. Alternatively, in some example embodiments, an access network device may be deployed separately from the satellite, such as, deployed on the ground, also referred to as transparent architecture. In the present disclosure, according to the specific application scenario or requirements, either or both of the satellite and the access network device may be considered as the second apparatus 120. In present disclosure is not limited in this regard.

Additionally, in some example embodiments, either or both of the first apparatus 110 and the second apparatus 120 may move over time, which results that the location relationships between the first apparatus 110, the second device 120 and the cell 130 may be changed.

As illustrated in FIG. 1, cell 140 may be a neighbor cell, candidate cell or a target cell of the first apparatus. In some example embodiments, the cell 140 may be provided by the third apparatus 125.

In the following, for the purpose of illustration, some example embodiments are described with the first apparatus 110 operating as a terminal device and the second device 120 operating as a network device. However, in some example embodiments, operations described in connection with a terminal device may be implemented at a network device or other device, and operations described in connection with a network device may be implemented at a terminal device or other device.

In some example embodiments, if the first apparatus 110 is a terminal device and the second apparatus 120 is a network device, a link from the second apparatus 120 to the first apparatus 110 is referred to as a downlink (DL), while a link from the first apparatus 110 to the second apparatus 120 is referred to as an uplink (UL). In DL, the second apparatus 120 is a transmitting (TX) device (or a transmitter) and the first apparatus 110 is a receiving (RX) device (or a receiver). In UL, the first apparatus 110 is a TX device (or a transmitter) and the second apparatus 120 is a RX device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

### Work Principle and Example Signaling for Communication

In the following, more details about the operations upon a completion of positioning measurement (such as, GNSS)/at an ending of a measurement gap will be discussed with reference to FIG. 1 to FIG. 6. For the purposes of discussion, example signaling flows in FIG. 1 to FIG. 6 will be discussed with reference to FIG. 1, for example, by using the first apparatus 110, the second apparatus 120, the third apparatus 125, the cell 130 and the cell 140.

In the example of FIG. 1 to FIG. 6, the first apparatus 110 may function as a terminal apparatus and the second apparatus 120 may function as a network apparatus.

It is to be understood that the operations at the first apparatus 110 and the second apparatus 120 should be coordinated. In other words, the second apparatus 120 and the first apparatus 110 should have common understanding about configurations, parameters and so on. Such common understanding may be implemented by any suitable interactions or by applying the same rule/policy.

In the following, although some operations are described from a perspective of the first apparatus 110, it is to be understood that the corresponding operations should be performed by the second apparatus 120. Similarly, although some operations are described from a perspective of the second apparatus 120, it is to be understood that the corresponding operations should be performed by the first apparatus 110. Merely for brevity, some of the same or similar contents are omitted here.

In addition, in the following description, examples of message type (such as "RRC message", "MAC CE", "DCI") are only for the purpose of illustration without suggesting any limitations. In other example embodiments, any suitable message types may be used for the interaction between the first apparatus 110 and the second apparatus 120.

In the following, the behaviors of the UE/network are discussed especially for scenarios: the UE is configured with a GNSS measurement gap while UE is also configured with other measurement, such as RLM/RRM, or the UE suspends some AS operations (e.g., SR, BSR, RACH, TAT timer) when the UE is performing GNSS measurement during the GNSS measurement gap.

In the following, the positioning measurement completion time refers to the actual time where the first apparatus 110 has completed the positioning measurement. The completion time of the positioning measurement may be shorter than the allocated/confiugured GNSS measurement gap.

Reference is now made to FIG. 2, which shows a signaling chart 200 for communication according to some example embodiments of the present disclosure.

In operation, in order to ensure to following operations more technically reasonable, in some example embodiments, the first apparatus 110 may determine a relationship between a completion time of a positioning measurement (which is smaller than the measurement gap) and an availability time of a serving cell (such as, cell 130) of the first apparatus 110, and/or a first time length of a duration for performing the positioning measurement and a second time length of a validity duration of an uplink synchronization parameter in the serving cell (where the first time length is shorter than a third time length of the positioning measurement gap). Based on this relationship, the following operations may be performed more technically reasonably.

It is to be noted that relationship may be determined based on one or more of the following: 1) an association of a completion time of a positioning measurement and an availability time of a serving cell of the first apparatus 110; 2) an association of a first time length of a duration for performing the positioning measurement and a second time length of a validity duration of an uplink synchronization parameter in the serving cell; and 3) other suitable associations. In summary, the relationship may be determined based on multiple factors. The present disclosure is not limited in this regard.

As illustrated in FIG. 2, the first apparatus 110 performs 230 positioning measurement, and upon a completion of the positioning measurement, the first apparatus 110 performs 240, based on the relationship, at least one of the following:
> skipping a radio link failure (RLF) procedure in the serving cell (such as, the cell 130);
> performing a re-establishment procedure with a target cell (such as, the cell 140);
> performing a cell re-selection procedure;
> stopping at least one access stratum (AS) operation which has been suspended due to performing the positioning measurement;
> performing a mobility-related procedure (such as, CHO triggered based on location. For example, the first apparatus 110 may have obtained a new location (via the positioning measurement) and may execute the CHO based on the pre-configured location trigger);
> starting to perform at least one mobility or positioning reference signal (PRS) measurement, a duration for performing the at least one mobility or PRS measurement being at least partially overlapped with the duration for performing the positioning measurement; or
> resuming the at least one AS operation which has been suspended due to performing the positioning measurement.

Accordingly, the second apparatus 120 also needs to determine the similar relationship. In some embodiments, the second apparatus 120 may determine 250 a relationship between at least one of the following: a completion time at which a first apparatus 110 completes a positioning measurement and an availability time of a serving cell of the first apparatus 110 provided by the second apparatus 120, or a first time length of a duration for performing the positioning measurement by the first apparatus 110 and a second time length of a validity duration of an uplink synchronization parameter in the serving cell.

It is to be clarified that although the second apparatus 120 may not determine/monitor/know when the first apparatus 110 actually complete the positioning measurement, the second apparatus 120 may estimate the completion time at which the first apparatus 110 has completed a positioning measurement (or the first time length of a duration for performing the positioning measurement by the first apparatus 110). In this event, the second apparatus 120 may predict/estimate/expect that the first apparatus 110 has completed the positioning measurement. With this prediction/estimation/expectation, the second apparatus 120 may behave consistently with the first apparatus 110. The details about how to predict/estimate/expect that the first apparatus 110 has completed the positioning measurement may be up to a network implementation.

In some example embodiments, the first apparatus 110/second apparatus 120 may determine the availability time of the serving cell based on at least one of the following:
> a serving time of a second apparatus 120 that provide the serving cell, such as, t-service for earth fixed cells,
> satellite assistance information of the second apparatus 120,
> a location of the first apparatus 110,
> a reference point of the serving cell, or
> a coverage area of the serving cell.

In some example embodiments, the validity duration of the uplink synchronization parameter may be defined as a default value. As one example, the validity duration is pre-defined by the communication organization (such as 3GPP), or pre-defined by the network operator or service provider. In this way, no additional signaling exchanging between the first apparatus 110 and the second apparatus 120 is needed.

Alternatively, in some example embodiments, the validity duration may be dynamically or semi-statically configured. For example, either the first apparatus 110 and the second apparatus 120 may determine the validity duration and then inform the validity duration to the other apparatus.

In some example embodiments, the synchronization threshold (i.e., the validity duration of the uplink synchronization parameter) may be a UE-specific value, which defines how long the UE is able to maintain serving cell synchronization without perform any serving cell measurements.

In some example embodiments, the first apparatus 110 may report such a value of the synchronization threshold as a UE capability. Alternatively, the synchronization threshold may be configured by the second apparatus 120.

In the following, how to operate based on the relationship will be discussed in detail.

In some example embodiments, if the completion time of the positioning measurement is later than or equal to the availability time of the serving cell, upon the completion of the positioning measurement, the first apparatus 110 may perform at least one of the following: the skipping the RLF procedure in the serving cell, the performing the re-establishment procedure with a target cell, the performing the cell re-selection procedure or the stopping the at least one AS operation.

Alternatively, or in addition, if the first time length is equal to or longer than the second time length, the first apparatus may perform at least one of the following: the skipping the RLF procedure in the serving cell, the performing the re-establishment procedure with a target cell, the performing the cell re-selection procedure or the stopping the at least one AS operation.

For a better understanding, some example embodiments are discussed, where the GNSS measurement are used as the example of positioning measurement.

In some example embodiments, the first apparatus 110 may compares the GNSS measurement completion time and the serving cell availability time. If the GNSS measurement completion time exceeds the serving cell availability time, the first apparatus 110 may perform the RRC re-establishment procedure (or a cell reselection) upon the GNSS measurement completion.

Alternatively, or in addition, if the GNSS measurement completion time exceeds the serving cell availability time the first apparatus 110 may skip the RLF procedure in the serving cell.

Alternatively, or in addition, if the GNSS measurement completion time exceeds the serving cell availability time the first apparatus 110 may stop the suspended AS operations upon the GNSS measurement completion.

In some example embodiments, the cell availability time can be determined based on t-service for earth fixed cells or based on satellite assistance information for the earth moving cells (e.g., the distance between the first apparatus 110 location and the cell reference point exceeds a threshold).

Alternatively, the first apparatus 110 compares the GNSS measurement time length (i.e., the first time length of a duration for performing the positioning measurement) and a synchronization threshold (i.e., the second time length of the validity duration of an uplink synchronization parameter). If the GNSS measurement time length exceeds the synchronization threshold, the first apparatus 110 may perform the RRC re-establishment procedure (or a cell reselection) upon the GNSS measurement completion.

Alternatively, or in addition, if the GNSS measurement time length exceeds a synchronization threshold, the first apparatus 110 may skip the RLF procedure in the serving cell.

Alternatively, or in addition, if the GNSS measurement time length exceeds a synchronization threshold, the first apparatus 110 may stop the suspended AS operations upon the GNSS measurement completion.

In some example embodiments, the second apparatus may assist the first apparatus 110 with connecting to the next cell. For example, the serving cell may provide the UE context to the target cell and the target cell may provide contention-free random access resources/PRACH with configured C-RNTI/RACH-less access resources via the serving cell.

In some example embodiments, the first apparatus 110 may receive a third message from the second apparatus 120, where the third message may indicate at least one of the following:
> contention-free random access channel (RACH) resources of the target cell,
> RACH-less access resources of the target cell, or
> a cell-radio network temporary identifier (C-RNTI) used for a physical random access channel (PRACH) transmission on the target cell.

In some example embodiments, the network may also provide the relevant satellite ephemeris for the target cell (e.g., future ephemeris, which is valid at the time of GNSS MG completion). The configuration/information may be provided as part of or together with the GNSS MG trigger.

In some embodiments, the second apparatus 120 also may provide parameter of *t-serviceStart* (which indicates when the target cell will start serving the area, for the earth fix cell).

In some example embodiments, if the completion time of the positioning measurement is earlier than or equal to the availability time of the serving cell, upon the completion of the positioning measurement, the first apparatus 110 may perform at least one of the following: the starting to perform the at least one mobility or PRS measurement, performing the mobility-related procedure (such as, CHO triggered based on location. For example, the first apparatus 110 may have obtained a new location (via the positioning measurement) and may execute the CHO based on the pre-configured location trigger) or the resuming the at least one AS operation.

Alternatively, or in addition, if the first time length is longer than or equal to the second time length, upon the completion of the positioning measurement, the first apparatus 110 may perform at least one of the following: the starting to perform the at least one mobility or PRS measurement, performing the mobility-related procedure or the resuming the at least one AS operation.

In some example embodiments, the first apparatus 110 may extend or shift the duration for performing the at least one mobility or PRS measurement.

In some example embodiments, after a completion of the at least one mobility or PRS measurement, the first apparatus 110 may transmit information indicating the remaining positioning validity duration to the second apparatus 120.

In some example embodiments, the first apparatus 110 may transmit a notification to the second apparatus 120, where the notification indicates at least one of the following:
> the at least one mobility measurement being shifted to the completion of the positioning measurement,
> the duration for performing the at least one mobility measurement being extended,
> the number of the at least one mobility measurement, or
> time information required for performing the at least one mobility measurement.

In some example embodiments, the first apparatus 110 may notify the second apparatus 120 (as a UE capability) about the number of RLM/RRM measurements it needs to perform/the required time to perform such measurements, after a GNSS measurement gap. Then the second apparatus 120 may shift/extend the gaps accordingly.

In some example embodiments, the first apparatus 110 may optionally report a GNSS position fix time duration, which also allows the first apparatus 110 to perform mobility measurements during the duration (UE implementation solution).

In some example embodiments, the (GNSS) position fix time duration reported by the first apparatus 110 (such as, a UE) may be longer than a duration which is actually required by the by the first apparatus 110 (such as, a UE). Thus, the first apparatus 110 (such as, a UE) may perform mobility measurements during the difference between the actually-required duration and the reported position fix time duration.

In some example embodiments, the first apparatus 110 may transmit 220 a first message to the second apparatus 120, where the first message may indicate at least one of the following:
> a first positioning position fix time duration and an additional duration used for performing at least one mobility or PRS measurement, or
> a second positioning position fix time duration which is determined based at least in part on the additional duration for performing the at least one mobility or PRS measurement.

In some example embodiments, the second apparatus 120 may receive 21-0 a second message from the second apparatus 120, where the second message may indicate at least one of the following:
> a first indication indicating that the first apparatus 110 is allowed to perform the at least one mobility or PRS measurement upon the completion of the positioning measurement,
> at least one parameter indicating an additional duration used for performing the at least one mobility or PRS measurement, or
> an extended time length of the positioning measurement gap configured.

For a better understanding, some example embodiments are discussed, where the GSNN measurement are used as the example of positioning measurement.

In some example embodiments, if the GNSS measurement completion time does not exceed the serving cell availability time and/or the GNSS measurement time length does not exceed the synchronization threshold, the first apparatus 110 may resume the suspended AS operations upon the GNSS measurement completion.

Furthermore, the first apparatus 110 may still experience that the GNSS measurement (gap) collides with RLM and/or RRM measurements. In this event, the first apparatus 110 may evaluate if such mobility measurements are requiring measurement gaps. If so, the first apparatus 110 may have to shift the mobility measurement gaps to occur upon completion of the GNSS measurement.

In some example embodiments, the first apparatus 110 may notify the second apparatus 120 about such shift, if the mobility measurement gap extends beyond the GNSS measurement gap duration (assuming the first apparatus 110 completes the GNSS measurement before the end of the GNSS measurement gap). Otherwise, the first apparatus 110 may perform the mobility measurement autonomously before reporting the GNSS validity duration to indicate the successful GNSS measurement.

In some example embodiments, the second apparatus 120 may also indicate as part of the GNSS measurement gap configuration or the GNSS measurement trigger that the first apparatus 110 is allowed to perform mobility measurements after the GNSS measurement. For example, the second apparatus 120 may configure the number of additional mobility measurement gaps or extended time length of the measurement gap.

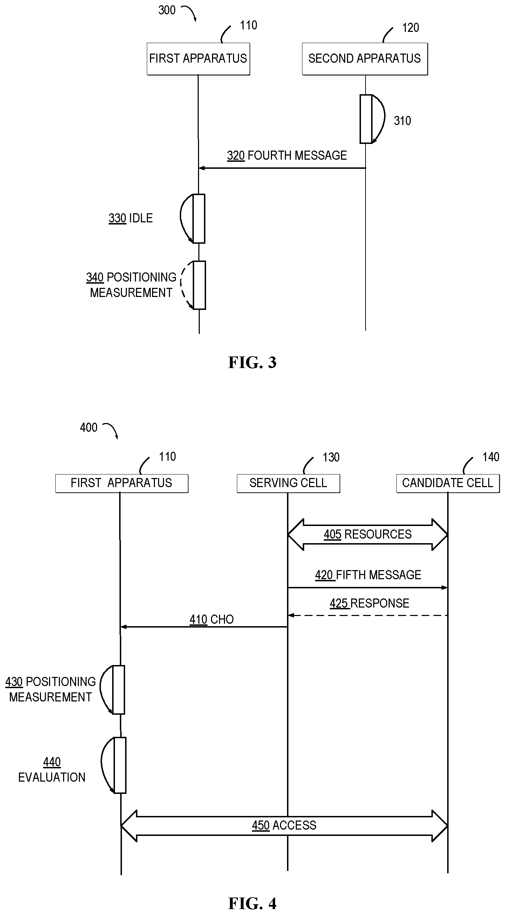

According to some embodiment, the operations at the first apparatus 110 may be controlled by the second apparatus 120, which will be discussed with reference to FIG. 3, which shows a signaling chart 300 for communication according to some example embodiments of the present disclosure.

In operation, the second apparatus 120 may determine 310 a relationship between a completion time of a positioning measurement and an availability time of a serving cell a first apparatus 110. Alternatively, or in addition, the second apparatus 120 may determine 310 a relationship a first time length of the positioning measurement and a second time length of a validity duration of an uplink synchronization parameter in the serving cell.

Then, if the completion time of the positioning measurement is later than or equal to the availability time of the serving, and/or the first time length is equal to or longer than the second time length, the second apparatus 120 may transmit 320 a fourth message to release the first apparatus 110 to an idle state.

In some example embodiments, the fourth message indicates at least one of the following:
> a positioning-related cause indicating the first apparatus to perform a positioning measurement, or
> a target or candidate cell for the first apparatus.

As illustrated in FIG. 3, upon receiving the fourth message, the first apparatus 110 may transition 330 in the idle state.

Further, in some example embodiments, upon receiving the fourth message, the first apparatus 110 may perform 340 the positioning measurement after receiving the fourth message.

In case of non-continuous coverage NTN, the target cell (i.e., next serving cell) may be far away from current serving cell. In this event, the first apparatus 110 may start to perform the positioning measurement when the first apparatus 110 is near to the target cell. In some example embodiments, the first apparatus 110 may determine a time point to perform the positioning measurement based on an available time of the target cell. In this way, power consumption used for performing the unnecessary positioning measurement may be avoided.

In some example embodiments, the first apparatus 110 may compare the GNSS measurement completion time and the serving cell availability time. If the GNSS measurement completion time exceeds the serving cell availability time, the second apparatus 120 may skip the GNSS measurement trigger and instead release the first apparatus 110 to RRC Idle with a cause = "perform GNSS measurement" and indicate the target cell identity (such as, PCI) or at least the frequency layer/resource/band of the target cell(s) if PCI is not known at this state.

According to some embodiment, CHO procedure also may be further improved. Reference is now made to FIG. 4, which shows a signaling chart 400 for communication according to some example embodiments of the present disclosure.

As illustrated in FIG. 4, the serving cell 130 and the candidate cell 140 may determine 405 resources to be used by a first apparatus 110 for performing a CHO on the candidate cell 140.

Then the serving cell 130 may transmit 410 a CHO configuration of the candidate cell 140 to the first apparatus 110. Further, the CHO configuration may indicate the resources for performing a CHO on the candidate cell 140.

In the traditional CHO procedure, with this CHO configuration, the first apparatus 110 may perform CHO execution evaluation and be triggered to switch to the candidate cell 140 if the CHO condition is satisfied. However, in case that a positioning measurement conflicts with the CHO execution evaluation, the CHO execution evaluation may be suspended. If so, the previously-configured resources for performing a CHO on the candidate cell 140 may be invalid. With the following discussions, the above problem may be solved.

As illustrated in FIG. 4, the first apparatus 110 may perform 430 a positioning measurement which conflicts with a CHO execution evaluation on the candidate cell; and may start 440 the CHO execution evaluation after a completion of the positioning measurement or an end of a positioning measurement gap of the positioning measurement. In the following, the first apparatus 110 may access 450 the candidate cell 140 by using switched resources.

In order to ensure the candidate cell 140 also may provide the switched resources. As illustrated in FIG. 4, in accordance with a determination that a positioning measurement at the first apparatus 110 conflicts with a CHO execution evaluation on the candidate cell 140, the serving cell 130 may transmit 420 a fifth message to the candidate cell 140, where the fifth message indicates the candidate cell to shift the resources to be used for performing the CHO on the candidate cell.

Further, whether allowing to switch the resources may be enabled on demand.

In some embodiments, in case that the serving cell 130 determines the positioning measurement (such as, UE GNSS) and the CHO collides, the serving cell 130 may need to ask the candidate cell 140 if resources can be shifted by transmitting the fifth message to the candidate cell 140, where the fifth message requests the candidate cell 140 to shift the resources. Optionally, the candidate cell 140 may transmit 425 a response to the serving cell 130, where the response indicating the resources may be shifted. In this event, the serving cell 130 may transmit a second indication to the first apparatus 110, the second indication indicates that first apparatus is allowed to shift the starting of the CHO execution evaluation.

Alternatively, in some embodiments, the serving cell 130 may transmit a second indication to the first apparatus 110, the second indication indicates that first apparatus is allowed to shift the starting of the CHO execution evaluation. In some example embodiments, the second indication may be comprised in the CHO configuration.

Additionally, the fifth message may be transmitted to the candidate cell 140 on a condition of the second indication.

For a better understanding, some example embodiments are discussed, where the GSNN measurement are used as the example of positioning measurement.

In some example embodiments, in the case of eMTC where conditional handover is prepared and GNSS measurements started, the serving node may inform the target node(s) to extend the reservation time to allow the UE to do a postponed CHO execution evaluation and complete the conditional handover. In some embodiments, the CHO may be performed based on location, time and/or radio measurements, and that all types of evaluations (and/or the CHO execution) would be delayed in case of a long GNSS measurement.

In some example embodiments, the first apparatus 110 may implicitly be aware of the shift of the reservation or the CHO configuration may define such a shift is allowed/not allowed in case of collision with a GNSS measurement.

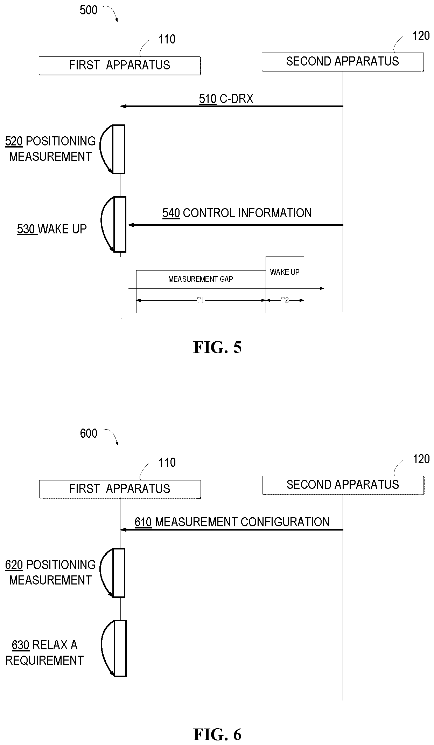

According to some embodiment, C-DRX scenario also may be further improved. Reference is now made to FIG. 5, which shows a signaling chart 500 for communication according to some example embodiments of the present disclosure.

In some example embodiments, the second apparatus 120 may transmit 510 a C-DRX configuration indicating at least one active duration to the first apparatus 110. In FIG. 5, the first apparatus 110 may perform 520 positioning measurement.

In the following, as for the first apparatus 110, in response to at least one active duration being overlapped with a positioning measurement gap, the first apparatus 110 may wake up 530 to monitor control information at an end of the measurement gap, the control information indicating at least one pending transmission of the first apparatus.

Accordingly, in some example embodiments, as for the second apparatus 120, in response to an active duration of the at least one active duration being overlapped with a positioning measurement gap, the second apparatus 120 may transmit control information indicating at least one pending transmission of the first apparatus at an end of a measurement gap of the positioning measurement.

As illustrated in FIG. 5, the first apparatus may wake up (such as, exit C-DRX mode) during T2, and may monitor control information during T2. In some example embodiments, the during T2 may be a configured/default ON duration or a configured/default wake-up duration.

In some example embodiments, the second apparatus 120 may transmit a configuration to the first apparatus 120, where the configuration may indicate at least one of the following: a third indication indicates that the first apparatus is allowed to wake up at the end of a measurement gap, or an ON-duration that follows the measurement gap (such as, T2).

For a better understanding, some example embodiments are discussed, where the GSNN measurement are used as the example of positioning measurement.

In some example embodiments, if the DRX ON duration overlapped within the GNSS measurement gap, the first apparatus 110 may be configured to exit C-DRX at the end of GNSS measurement gap to check any pending transmissions of overlapped ON duration. In some example embodiments, the second apparatus 120 may configure the first apparatus 120 to wake-up for one (short) ON duration after the GNSS measurement gap in addition to the normal C-DRX configuration.

According to some embodiment, the mobility measurement also may be further improved. Reference is now made to FIG. 6, which shows a signaling chart 600 for communication according to some example embodiments of the present disclosure.

In operation, the first apparatus 110 receive 610 a measurement configuration from the second apparatus 120, where the measurement configuration is used for configuring a mobility measurement on a neighbor cell (such as, the cell 140).

In the following, the first apparatus 110 may perform 620 a positioning measurement which conflicts with the mobility measurement on the neighbor cell; and the first apparatus 110 may relax 630 a requirement of the mobility measurement on the neighbor cell.

Further, the relaxing procedure may be controlled/configured by the second apparatus 120/serving cell 130. Specifically, in some example embodiments, the first apparatus 110 may receive a sixth message from the second apparatus 120, where the sixth message indicating at least one of the following:
> a fourth indication indicating that the first apparatus is allowed to relax the requirement of the mobility measurement on the neighbor cell if the mobility measurement is conflicts with the positioning measurement, or
> at least one parameter for relaxing the requirement.

For a better understanding, some example embodiments are discussed, where the GSNN measurement are used as the example of positioning measurement.

In some example embodiments, the second apparatus 120 may indicate the first apparatus 110 that the first apparatus 110 is allowed to relax RLM/RRM measurement requirements, e.g., the time required to evaluate a certain target cell, when the measurements collide with a GNSS measurement gap. In some example embodiments, this indication may be provided in the GNSS or mobility measurement configuration.

With the above processes, the UE may better handle the long GNSS position fix time durations, especially when the GNSS measurement gaps collide with RLM/RRM measurements.

### Example Methods

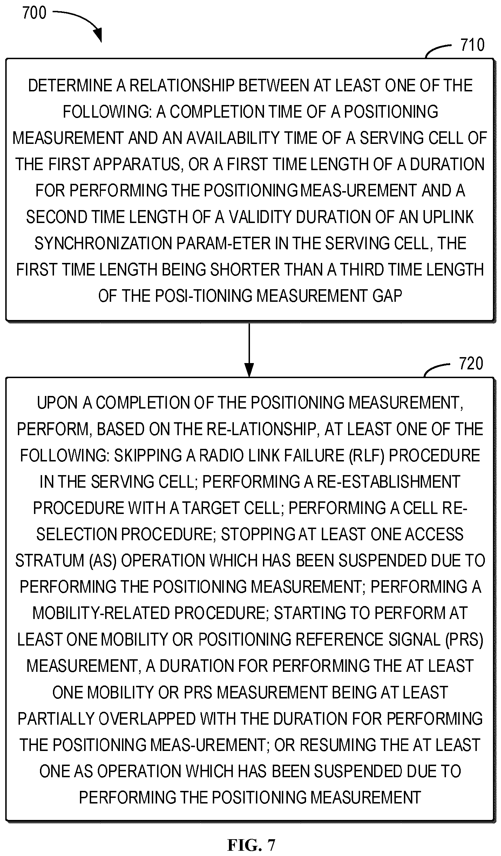

FIG. 7 shows a flowchart of an example method 700 implemented at a first apparatus in accordance with some example embodiments of the present disclosure. For the purpose of discussion, the method 700 will be described from the perspective of the first apparatus 110 in FIG. 1.

At block 710, the first apparatus 110 determines a relationship between at least one of the following: a completion time of a positioning measurement and an availability time of a serving cell of the first apparatus 110, or a first time length of a duration for performing the positioning measurement and a second time length of a validity duration of an uplink synchronization parameter in the serving cell, the first time length being shorter than a third time length of the positioning measurement gap.

At block 720, upon a completion of the positioning measurement, the first apparatus 110 performs, based on the relationship, at least one of the following: skipping a radio link failure (RLF) procedure in the serving cell; performing a re-establishment procedure with a target cell; performing a cell re-selection procedure; stopping at least one access stratum (AS) operation which has been suspended due to performing the positioning measurement; performing a mobility-related procedure; starting to perform at least one mobility or positioning reference signal (PRS) measurement, a duration for performing the at least one mobility or PRS measurement being at least partially overlapped with the duration for performing the positioning measurement; or resuming the at least one AS operation which has been suspended due to performing the positioning measurement.

In some example embodiments, upon the completion of the positioning measurement, the first apparatus 110 may perform at least one of the following: the skipping the RLF procedure in the serving cell, the performing the re-establishment procedure with a target cell, the performing the cell re-selection procedure or the stopping the at least one AS operation, in accordance with at least one of the following: a determination that the completion time of the positioning measurement is later than or equal to the availability time of the serving cell, or a determination that the first time length is equal to or longer than the second time length.

In some example embodiments, upon the completion of the positioning measurement, the first apparatus 110 may perform at least one of the following: the starting to perform the at least one mobility or PRS measurement, the performing the mobility-related procedure, or the resuming the at least one AS operation, in accordance with at least one of the following: a determination that the completion time of the positioning measurement is earlier than or equal to the availability time of the serving cell, or a determination that the first time length is longer than or equal to the second time length.

In some example embodiments, the first apparatus 110 may extend or shift the duration for performing the at least one mobility or PRS measurement.

In some example embodiments, after a completion of the at least one mobility or PRS measurement, the first apparatus 110 may transmit information indicating the remaining positioning validity duration to the second apparatus 120.

In some example embodiments, the first apparatus 110 may transmit, to the second apparatus 120, a notification indicating at least one of the following: the at least one mobility measurement being shifted to the completion of the positioning measurement, the duration for performing the at least one mobility measurement being extended, the number of the at least one mobility measurement, or timing information required for performing the at least one mobility measurement.

In some example embodiments, the first apparatus 110 may transmit, to the second apparatus 120, a first message indicating at least one of the following: a first positioning position fix time duration and an additional duration used for performing at least one mobility or PRS measurement, or a second positioning position fix time duration which is determined based at least in part on the additional duration for performing the at least one mobility or PRS measurement.

In some example embodiments, the first apparatus 110 may receive, from the second apparatus 120, a second message indicating at least one of the following: a first indication indicating that the first apparatus 110 is allowed to perform the at least one mobility or PRS measurement upon the completion of the positioning measurement, at least one parameter indicating an additional duration used for performing the at least one mobility or PRS measurement, or an extended time length of the positioning measurement gap configured.

In some example embodiments, the first apparatus 110 may receive, from the second apparatus 120, a third message indicating at least one of the following: contention-free random access channel(RACH) resources of the target cell, RACH-less access resources of the target cell, or a cell-radio network temporary identifier (C-RNTI) used for a physical random access channel (PRACH) transmission on the target cell.

In some example embodiments, the first apparatus 110 may determine the availability time of the serving cell based on at least one of the following: a serving time of a second apparatus 120 that provide the serving cell, satellite assistance information of the second apparatus 120 a location of the first apparatus 110, a reference point of the serving cell, or a coverage area of the serving cell.

In some example embodiments, the validity duration of the uplink synchronization parameter may be defined as a default value, configured by the second apparatus 120, or reported to the second apparatus 120 by the first apparatus 110.

In some example embodiments, the first apparatus 110 may be a terminal device and the second apparatus 120 may be a network apparatus.

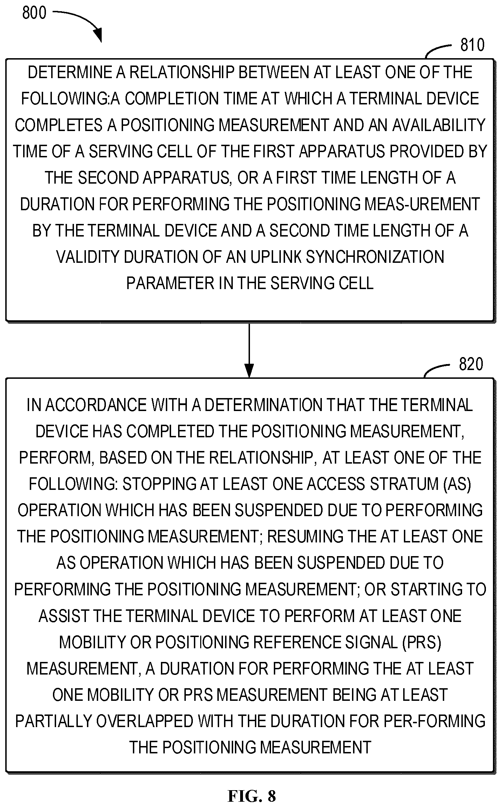

FIG. 8 shows a flowchart of an example method 800 implemented at a second apparatus in accordance with some example embodiments of the present disclosure. For the purpose of discussion, the method 800 will be described from the perspective of the second apparatus 120 in FIG. 1.

At block 810, the second apparatus 120 determines a relationship between at least one of the following: a completion time at which a first apparatus completes a positioning measurement and an availability time of a serving cell of the first apparatus 110 provided by the second apparatus 120, or a first time length of a duration for performing the positioning measurement by the first apparatus and a second time length of a validity duration of an uplink synchronization parameter in the serving cell.

At block 820, in accordance with an expectation that the first apparatus has completed the positioning measurement, the second apparatus 120 performs, based on the relationship, at least one of the following: stopping at least one access stratum (AS) operation which has been suspended due to performing the positioning measurement; resuming the at least one AS operation which has been suspended due to performing the positioning measurement; or starting to assist the first apparatus to perform at least one mobility or positioning reference signal (PRS) measurement, a duration for performing the at least one mobility or PRS measurement being at least partially overlapped with the duration for performing the positioning measurement.

In some example embodiments, in accordance with an expectation that the first apparatus has completed the positioning measurement, the second apparatus 120 may stop the at least one AS operation, if at least one of the following: the completion time is later than or equal to the availability time of the serving cell, or the first time length is equal to or longer than the second time length.

In some example embodiments, in accordance with an expectation that the first apparatus has completed the positioning measurement, the second apparatus 120 may start to assist the first apparatus to perform the at least one mobility or PRS measurement or resuming the at least one AS operation, if at least one of the following: the completion time is earlier than or equal to the availability time of the serving cell, or the first time length is longer than or equal to the second time length.

In some example embodiments, the second apparatus 120 may extend or shifts the duration configured for performing the at least one mobility or PRS measurement.

In some example embodiments, the second apparatus 120 may receive information indicating the remaining positioning validity duration.

In some example embodiments, the second apparatus 120 may receive, from the first apparatus 110, a notification indicating at least one of the following: the at least one mobility measurement being shifted to the completion of the positioning measurement, the duration for performing the at least one mobility measurement being extended, the number of the at least one mobility measurement, or timing information required for performing the at least one mobility measurement.

In some example embodiments, the second apparatus 120 may receive, from the first apparatus 110, a first message indicating at least one of the following: a first positioning position fix time duration and an additional duration used for performing at least one mobility or PRS measurement, or a second positioning position fix time duration which is determined based at least in part on the additional duration for performing the at least one mobility or PRS measurement.

In some example embodiments, the second apparatus 120 may transmit, to the first apparatus 110, a second message indicating at least one of the following: a first indication indicating that the first apparatus 110 is allowed to perform the at least one mobility or PRS measurement upon the completion of the positioning measurement, at least one parameter indicating an additional duration used for performing the at least one mobility or PRS measurement, or an extended time length of the positioning measurement gap configured.

In some example embodiments, the second apparatus 120 may transmit, to the first apparatus 110, a third message indicating at least one of the following: contention-free random access channel(RACH) resources of the target cell, RACH-less access resources of the target cell, or a cell-radio network temporary identifier (C-RNTI) used for a physical random access channel (PRACH) transmission on the target cell.

In some example embodiments, the second apparatus 120 may determine the availability time of the serving cell based on at least one of the following: a serving time of a second apparatus 120 that provide the serving cell, satellite assistance information of the second apparatus 120 a location of the first apparatus 110, a reference point of the serving cell, or a coverage area of the serving cell.

In some example embodiments, the validity duration of the uplink synchronization parameter may be defined as a default value, configured by the second apparatus 120, or reported to the second apparatus 120 by the first apparatus 110.

In some example embodiments, the first apparatus 110 may be a terminal device and the second apparatus 120 may be a network apparatus.

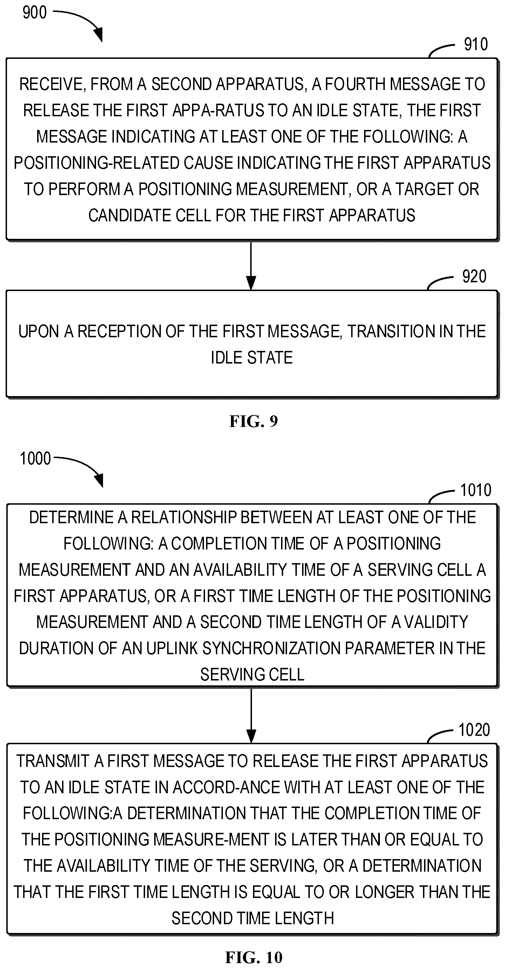

FIG. 9 shows a flowchart of an example method 900 implemented at a first apparatus in accordance with some example embodiments of the present disclosure. For the purpose of discussion, the method 900 will be described from the perspective of the first apparatus 110 in FIG. 1.

At block 910, the first apparatus 110 receives, from a second apparatus 120, a fourth message to release the first apparatus 110 to an idle state. The first message indicates at least one of the following: a positioning-related cause indicating the first apparatus 110 to perform a positioning measurement, or a target or candidate cell for the first apparatus 110.

At block 920, upon a reception of the first message, the first apparatus 110 transitions in the idle state.

In some example embodiments, the first apparatus 110 performs the positioning measurement after receiving the fourth message.

In some example embodiments, the first apparatus 110 determines a time point to perform the positioning measurement based on an available time of the target cell.

In some example embodiments, the first apparatus 110 is a terminal device and the second apparatus 120 is a network apparatus.

FIG. 10 shows a flowchart of an example method 1000 implemented at a second apparatus in accordance with some example embodiments of the present disclosure. For the purpose of discussion, the method 1000 will be described from the perspective of the second apparatus 120 in FIG. 1.

At block 1010, the second apparatus 120 determines a relationship between at least one of the following: a completion time of a positioning measurement and an availability time of a serving cell a first apparatus 110, or a first time length of the positioning measurement and a second time length of a validity duration of an uplink synchronization parameter in the serving cell.

At block 1020, the second apparatus 120 transmits a first message to release the first apparatus 110 to an idle state in accordance with at least one of the following: a determination that the completion time of the positioning measurement is later than or equal to the availability time of the serving, or a determination that the first time length is equal to or longer than the second time length.

In some example embodiments, the first message indicates at least one of the following: a positioning-related cause indicating the first apparatus 110 to perform a positioning measurement, or a target or candidate cell for the first apparatus 110.

In some example embodiments, the first apparatus 110 is a terminal device and the second apparatus 120 is a network apparatus.

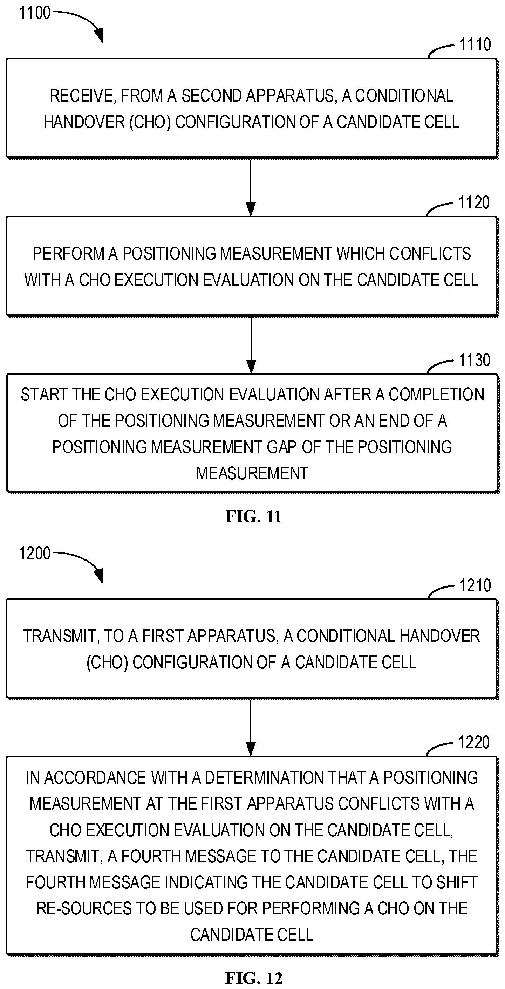

FIG. 11 shows a flowchart of an example method 1100 implemented at a first apparatus in accordance with some example embodiments of the present disclosure. For the purpose of discussion, the method 1100 will be described from the perspective of the first apparatus 110 in FIG. 1.

At block 1110, the first apparatus 110 receives, from a second apparatus 120, a conditional handover (CHO) configuration of a candidate cell.

At block 1120, the first apparatus 110 performs a positioning measurement which conflicts with a CHO execution evaluation on the candidate cell.

At block 1130, the first apparatus 110 starts the CHO execution evaluation after a completion of the positioning measurement or an end of a positioning measurement gap of the positioning measurement.

In some example embodiments, the first apparatus 110 receives, a second indication from the second apparatus 120, the second indication indicating that first apparatus 110 is allowed to shift the starting of the CHO execution evaluation.

In some example embodiments, the second indication is comprised in the CHO configuration.

In some example embodiments, the first apparatus 110 is a terminal device and the second apparatus 120 is a network apparatus.

FIG. 12 shows a flowchart of an example method 1200 implemented at the second apparatus in accordance with some example embodiments of the present disclosure. For the purpose of discussion, the method 1200 will be described from the perspective of the second apparatus 120 in FIG. 1.

At block 1210, the second apparatus 120 transmits, to a first apparatus 110, a conditional handover (CHO) configuration of a candidate cell.

At block 1220, in accordance with a determination that a positioning measurement at the first apparatus 110 conflicts with a CHO execution evaluation on the candidate cell, the second apparatus 120 transmits, a fourth message to the candidate cell, the fourth message indicating the candidate cell to shift resources to be used for performing a CHO on the candidate cell.

In some example embodiments, the second apparatus 120 transmits, a second indication to the first apparatus 110, the second indication indicating that first apparatus 110 is allowed to shift the starting of the CHO execution evaluation.

In some example embodiments, the second indication is comprised in the CHO configuration.

In some example embodiments, the first apparatus 110 is a terminal device and the second apparatus 120 is a network apparatus.

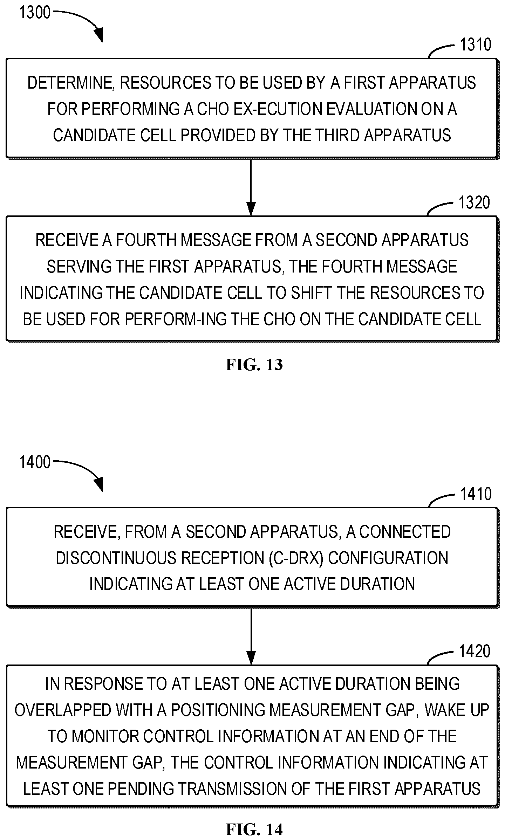

FIG. 13 shows a flowchart of an example method 1300 implemented at the third apparatus in accordance with some example embodiments of the present disclosure. For the purpose of discussion, the method 1300 will be described from the perspective of the third apparatus 125 in FIG. 1.

At block 1310, the third apparatus 125 determines, resources to be used by a first apparatus 110 for performing a conditional handover (CHO) on a candidate cell provided by the third apparatus 125.

At block 1320, the third apparatus 125 receives a fourth message from a second apparatus 120 serving the first apparatus 110. The fourth message indicates the candidate cell to shift the resources to be used for performing the CHO on the candidate cell.

In some example embodiments, the first apparatus 110 is a terminal device and the second and third apparatus 130es are a network apparatus.

FIG. 14 shows a flowchart of an example method 1400 implemented at the first apparatus in accordance with some example embodiments of the present disclosure. For the purpose of discussion, the method 1400 will be described from the perspective of the first apparatus 110 in FIG. 1.

At block 1410, the first apparatus 110 receives, from a second apparatus 120, a connected discontinuous reception (C-DRX) configuration indicating at least one active duration.

At block 1420, in response to at least one active duration being overlapped with a positioning measurement gap, the first apparatus 110 wakes up to monitor control information at an end of the measurement gap. The control information indicates at least one pending transmission of the first apparatus 110.

In some example embodiments, the first apparatus 110 receives, from the second apparatus 120, a fifth message indicating at least one of the following: a third indication indicates that the first apparatus 110 is allowed to wake up at the end of a measurement gap, or an ON-duration that follows the measurement gap.

In some example embodiments, the first apparatus 110 is a terminal device and the second apparatus 120 is a network apparatus.

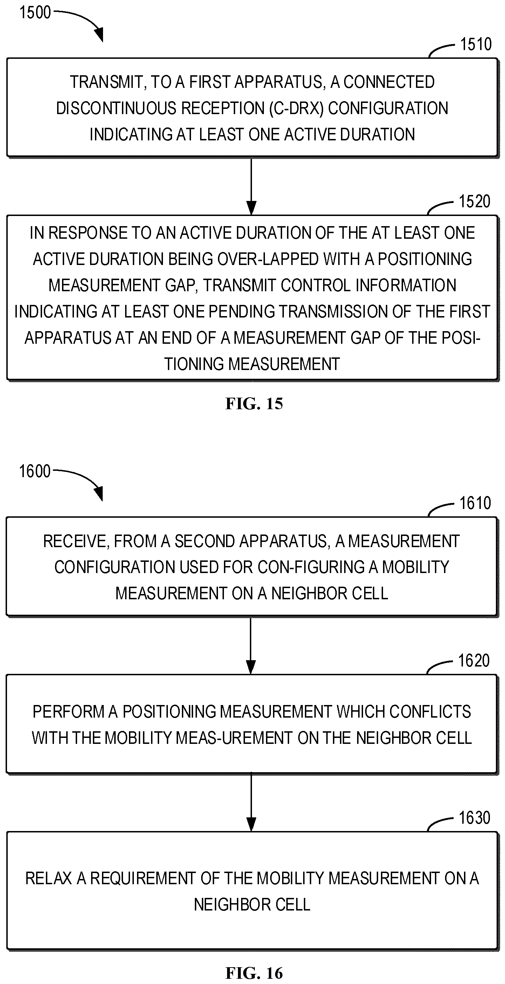

FIG. 15 shows a flowchart of an example method 1500 implemented at a second apparatus in accordance with some example embodiments of the present disclosure. For the purpose of discussion, the method 1500 will be described from the perspective of the second apparatus 120 in FIG. 1.

At block 1510, the second apparatus 120 transmits, to a first apparatus 110, a connected discontinuous reception (C-DRX) configuration indicating at least one active duration.

At block 1520, in response to an active duration of the at least one active duration being overlapped with a positioning measurement gap, the second apparatus 120 transmits control information indicating at least one pending transmission of the first apparatus 110 at an end of a measurement gap of the positioning measurement.

In some example embodiments, the second apparatus 120 transmits, to the first apparatus 110, a configuration indicating at least one of the following: a third indication indicates that the first apparatus 110 is allowed to wake up at the end of a measurement gap, or an ON-duration that follows the measurement gap.

In some example embodiments, the first apparatus 110 is a terminal device and the second apparatus 120 is a network apparatus.

FIG. 16 shows a flowchart of an example method 1600 implemented at a first apparatus in accordance with some example embodiments of the present disclosure. For the purpose of discussion, the method 1600 will be described from the perspective of the first apparatus 110 in FIG. 1.

At block 1610, the first apparatus 110 receives, from a second apparatus 120, a measurement configuration used for configuring a mobility measurement on a neighbor cell.

At block 1620, the first apparatus 110 performs a positioning measurement which conflicts with the mobility measurement on the neighbor cell.

At block 1630, the first apparatus 110 relaxes a requirement of the mobility measurement on the neighbor cell.

In some example embodiments, the first apparatus 110 receives, from the second apparatus 120, a sixth message indicating at least one of the following: a fourth indication indicating that the first apparatus 110 is allowed to relax the requirement of the mobility measurement on the neighbor cell if the mobility measurement is conflicts with the positioning measurement, or at least one parameter for relaxing the requirement.

In some example embodiments, the first apparatus 110 is a terminal device and the second apparatus 120 is a network apparatus.

### Example Apparatus, Device and Medium

In some example embodiments, a first apparatus 110 capable of performing any of the method 700 (for example, the first apparatus110 in FIG. 1) may comprise means for performing the respective operations of the method 700. The means may be implemented in any suitable form. For example, the means may be implemented in a circuitry or software module. The first apparatus 110 may be implemented as or included in the first apparatus 110 in FIG. 1.

In some example embodiments, the first apparatus 110 comprises means for determining a relationship between at least one of the following: a completion time of a positioning measurement and an availability time of a serving cell of the first apparatus 110, or a first time length of a duration for performing the positioning measurement and a second time length of a validity duration of an uplink synchronization parameter in the serving cell, the first time length being shorter than a third time length of the positioning measurement gap; means for upon a completion of the positioning measurement, performing, based on the relationship, at least one of the following: skipping a radio link failure (RLF) procedure in the serving cell; performing a re-establishment procedure with a target cell; performing a cell re-selection procedure; stopping at least one access stratum (AS) operation which has been suspended due to performing the positioning measurement; performing a mobility-related procedure; starting to perform at least one mobility or positioning reference signal (PRS) measurement, a duration for performing the at least one mobility or PRS measurement being at least partially overlapped with the duration for performing the positioning measurement; or resuming the at least one AS operation which has been suspended due to performing the positioning measurement.

In some example embodiments, the first apparatus 110 further comprises: means for upon the completion of the positioning measurement, performing at least one of the following: the skipping the RLF procedure in the serving cell, the performing the re-establishment procedure with a target cell, the performing a cell re-selection procedure or the stopping the at least one AS operation, in accordance with at least one of the following: a determination that the completion time of the positioning measurement is later than or equal to the availability time of the serving cell, or a determination that the first time length is equal to or longer than the second time length.

In some example embodiments, the first apparatus 110 further comprises: means for upon the completion of the positioning measurement, performing at least one of the following: the starting to perform the at least one mobility or PRS measurement, the performing the mobility-related procedure or the resuming the at least one AS operation, in accordance with at least one of the following: a determination that the completion time of the positioning measurement is earlier than or equal to the availability time of the serving cell, or a determination that the first time length is longer than or equal to the second time length.

In some example embodiments, the first apparatus 110 further comprises: means for extending or shift the duration for performing the at least one mobility or PRS measurement.

In some example embodiments, the first apparatus 110 further comprises: means for after a completion of the at least one mobility or PRS measurement, transmitting information indicating the remaining positioning validity duration to the second apparatus 120.

In some example embodiments, the first apparatus 110 further comprises: means for transmitting, to the second apparatus 120, a notification indicating at least one of the following: the at least one mobility measurement being shifted to the completion of the positioning measurement, the duration for performing the at least one mobility measurement being extended, the number of the at least one mobility measurement, or timing information required for performing the at least one mobility measurement.

In some example embodiments, the first apparatus 110 further comprises: means for transmitting, to the second apparatus 120, a first message indicating at least one of the following: a first positioning position fix time duration and an additional duration used for performing at least one mobility or PRS measurement, or a second positioning position fix time duration which is determined based at least in part on the additional duration for performing the at least one mobility or PRS measurement.

In some example embodiments, the first apparatus 110 further comprises: means for receiving, from the second apparatus 120, a second message indicating at least one of the following: a first indication indicating that the first apparatus 110 is allowed to perform the at least one mobility or PRS measurement upon the completion of the positioning measurement, at least one parameter indicating an additional duration used for performing the at least one mobility or PRS measurement, or an extended time length of the positioning measurement gap configured.

In some example embodiments, the first apparatus 110 further comprises: means for receiving, from the second apparatus 120, a third message indicating at least one of the following: contention-free random access channel(RACH) resources of the target cell, RACH-less access resources of the target cell, or a cell-radio network temporary identifier (C-RNTI) used for a physical random access channel (PRACH) transmission on the target cell.

In some example embodiments, the first apparatus 110 further comprises: means for determining the availability time of the serving cell based on at least one of the following: a serving time of a second apparatus 120 that provide the serving cell, satellite assistance information of the second apparatus 120 a location of the first apparatus 110, a reference point of the serving cell, or a coverage area of the serving cell.

In some example embodiments, the validity duration of the uplink synchronization parameter is defined as a default value, configured by the second apparatus 120, or reported to the second apparatus 120 by the first apparatus 110.

In some example embodiments, the first apparatus 110 is a terminal device and the second apparatus 120 is a network apparatus.

In some example embodiments, the first apparatus 110 further comprises means for performing other operations in some example embodiments of the method 700 or the first apparatus. In some example embodiments, the means comprises at least one processor; and at least one memory storing instructions that, when executed by the at least one processor, cause the performance of the first apparatus 110.

In some example embodiments, a second apparatus 120 capable of performing any of the method 800 (for example, the second apparatus in FIG. 1) may comprise means for performing the respective operations of the method 800. The means may be implemented in any suitable form. For example, the means may be implemented in a circuitry or software module. The second apparatus 120 may be implemented as or included in the second apparatus in FIG. 1.

In some example embodiments, the second apparatus 120 comprises means for determining a relationship between at least one of the following: a completion time at which a first apparatus completes a positioning measurement and an availability time of a serving cell of the first apparatus 110 provided by the second apparatus 120, or a first time length of a duration for performing the positioning measurement by the first apparatus and a second time length of a validity duration of an uplink synchronization parameter in the serving cell; means for in accordance with an expectation that the first apparatus has completed the positioning measurement, performing, based on the relationship, at least one of the following: stopping at least one access stratum (AS) operation which has been suspended due to performing the positioning measurement; resuming the at least one AS operation which has been suspended due to performing the positioning measurement; or starting to assist the first apparatus to perform at least one mobility or positioning reference signal (PRS) measurement, a duration for performing the at least one mobility or PRS measurement being at least partially overlapped with the duration for performing the positioning measurement.

In some example embodiments, the second apparatus 120 further comprises: means for in accordance with an expectation that the first apparatus has completed the positioning measurement, stopping the at least one AS operation, if at least one of the following: the completion time is later than or equal to the availability time of the serving cell, or the first time length is equal to or longer than the second time length.

In some example embodiments, the second apparatus 120 further comprises: means for in accordance with an expectation that the first apparatus has completed the positioning measurement, starting to assist the first apparatus to perform the at least one mobility or PRS measurement or resuming the at least one AS operation, if at least one of the following: the completion time is earlier than or equal to the availability time of the serving cell, or the first time length is longer than or equal to the second time length.

In some example embodiments, the second apparatus 120 further comprises: means for extending or shift the duration configured for performing the at least one mobility or PRS measurement.

In some example embodiments, the second apparatus 120 further comprises: means for receiving information indicating the remaining positioning validity duration.

In some example embodiments, the second apparatus 120 further comprises: means for receiving, from the first apparatus 110, a notification indicating at least one of the following: the at least one mobility measurement being shifted to the completion of the positioning measurement, the duration for performing the at least one mobility measurement being extended, the number of the at least one mobility measurement, or timing information required for performing the at least one mobility measurement.

In some example embodiments, the second apparatus 120 further comprises: means for receiving, from the first apparatus 110, a first message indicating at least one of the following: a first positioning position fix time duration and an additional duration used for performing at least one mobility or PRS measurement, or a second positioning position fix time duration which is determined based at least in part on the additional duration for performing the at least one mobility or PRS measurement.

In some example embodiments, the second apparatus 120 further comprises: means for transmitting, to the first apparatus 110, a second message indicating at least one of the following: a first indication indicating that the first apparatus 110 is allowed to perform the at least one mobility or PRS measurement upon the completion of the positioning measurement, at least one parameter indicating an additional duration used for performing the at least one mobility or PRS measurement, or an extended time length of the positioning measurement gap configured.

In some example embodiments, the second apparatus 120 further comprises: means for transmitting, to the first apparatus 110, a third message indicating at least one of the following: contention-free random access channel(RACH) resources of the target cell, RACH-less access resources of the target cell, or a cell-radio network temporary identifier (C-RNTI) used for a physical random access channel (PRACH) transmission on the target cell.

In some example embodiments, the second apparatus 120 further comprises: means for determining the availability time of the serving cell based on at least one of the following: a serving time of a second apparatus 120 that provide the serving cell, satellite assistance information of the second apparatus 120 a location of the first apparatus 110, a reference point of the serving cell, or a coverage area of the serving cell.

In some example embodiments, the validity duration of the uplink synchronization parameter is defined as a default value, configured by the second apparatus 120, or reported to the second apparatus 120 by the first apparatus 110.

In some example embodiments, the first apparatus 110 is a terminal device and the second apparatus 120 is a network apparatus.

In some example embodiments, the second apparatus 120 further comprises means for performing other operations in some example embodiments of the method 800 or the second apparatus. In some example embodiments, the means comprises at least one processor; and at least one memory storing instructions that, when executed by the at least one processor, cause the performance of the second apparatus 120.

In some example embodiments, a third apparatus 130 capable of performing any of the method 900 (for example, the first apparatus 110 in FIG. 1) may comprise means for performing the respective operations of the method 900. The means may be implemented in any suitable form. For example, the means may be implemented in a circuitry or software module. The third apparatus 125 may be implemented as or included in the first apparatus 110 in FIG. 1.

In some example embodiments, the third apparatus 125 comprises means for receiving, from a second apparatus 120, a fourth message to release the first apparatus 110 to an idle state, the first message indicates at least one of the following: a positioning-related cause indicating the first apparatus 110 to perform a positioning measurement, or a target or candidate cell for the first apparatus 110; and means for upon a reception of the first message, transitioning in the idle state.

In some example embodiments, the third apparatus 125 further comprises: means for performing the positioning measurement after receiving the fourth message.

In some example embodiments, the third apparatus 125 further comprises: means for determining a time point to perform the positioning measurement based on an available time of the target cell.

In some example embodiments, the first apparatus 110 is a terminal device and the second apparatus 120 is a network apparatus.

In some example embodiments, the third apparatus 125 further comprises means for performing other operations in some example embodiments of the method 900 or the first apparatus 110. In some example embodiments, the means comprises at least one processor; and at least one memory storing instructions that, when executed by the at least one processor, cause the performance of the third apparatus 125.

In some example embodiments, a fourth apparatus capable of performing any of the method 1000 (for example, the second apparatus 120 in FIG. 1) may comprise means for performing the respective operations of the method 1000. The means may be implemented in any suitable form. For example, the means may be implemented in a circuitry or software module. The fourth apparatus may be implemented as or included in the second apparatus 120 in FIG. 1.

In some example embodiments, the fourth apparatus comprises means for determining a relationship between at least one of the following: a completion time of a positioning measurement and an availability time of a serving cell a first apparatus 110, or a first time length of the positioning measurement and a second time length of a validity duration of an uplink synchronization parameter in the serving cell; means for transmitting a first message to release the first apparatus 110 to an idle state in accordance with at least one of the following: a determination that the completion time of the positioning measurement is later than or equal to the availability time of the serving, or a determination that the first time length is equal to or longer than the second time length.

In some example embodiments, the first message indicates at least one of the following: a positioning-related cause indicating the first apparatus 110 to perform a positioning measurement, or a target or candidate cell for the first apparatus 110.

In some example embodiments, the first apparatus 110 is a terminal device and the second apparatus 120 is a network apparatus.

In some example embodiments, the fourth apparatus further comprises means for performing other operations in some example embodiments of the method 1000 or the second apparatus 120. In some example embodiments, the means comprises at least one processor; and at least one memory storing instructions that, when executed by the at least one processor, cause the performance of the fourth apparatus.

In some example embodiments, a fifth apparatus capable of performing any of the method 1100 (for example, the first apparatus 110 in FIG. 1) may comprise means for performing the respective operations of the method 1100. The means may be implemented in any suitable form. For example, the means may be implemented in a circuitry or software module. The fifth apparatus may be implemented as or included in the first apparatus 110 in FIG. 1.

In some example embodiments, the fifth apparatus comprises means for receiving, from a second apparatus 120, a conditional handover (CHO) configuration of a candidate cell; means for performing a positioning measurement which conflicts with a CHO execution evaluation on the candidate cell; and means for starting the CHO execution evaluation after a completion of the positioning measurement or an end of a positioning measurement gap of the positioning measurement.

In some example embodiments, the fifth apparatus further comprises: means for receiving, a second indication from the second apparatus 120, the second indication indicating that first apparatus 110 is allowed to shift the starting of the CHO execution evaluation.

In some example embodiments, the second indication is comprised in the CHO configuration.

In some example embodiments, the first apparatus 110 is a terminal device and the second apparatus 120 is a network apparatus.

In some example embodiments, the fifth apparatus further comprises means for performing other operations in some example embodiments of the method 1100 or the first apparatus 110. In some example embodiments, the means comprises at least one processor; and at least one memory storing instructions that, when executed by the at least one processor, cause the performance of the fifth apparatus.

In some example embodiments, a sixth apparatus capable of performing any of the method 1200 (for example, the second apparatus 120 in FIG. 1) may comprise means for performing the respective operations of the method 1200. The means may be implemented in any suitable form. For example, the means may be implemented in a circuitry or software module. The sixth apparatus may be implemented as or included in the second apparatus 120 in FIG. 1.

In some example embodiments, the sixth apparatus comprises means for transmitting, to a first apparatus 110, a conditional handover (CHO) configuration of a candidate cell; and means for in accordance with a determination that a positioning measurement at the first apparatus 110 conflicts with a CHO execution evaluation on the candidate cell, transmitting, a fourth message to the candidate cell, the fourth message indicating the candidate cell to shift resources to be used for performing a CHO on the candidate cell.

In some example embodiments, the sixth apparatus further comprises: means for transmitting, a second indication to the first apparatus 110, the second indication indicating that first apparatus 110 is allowed to shift the starting of the CHO execution evaluation.

In some example embodiments, the second indication is comprised in the CHO configuration.

In some example embodiments, the first apparatus 110 is a terminal device and the second apparatus 120 is a network apparatus.

In some example embodiments, the sixth apparatus further comprises means for performing other operations in some example embodiments of the method 1200 or the second apparatus 120. In some example embodiments, the means comprises at least one processor; and at least one memory storing instructions that, when executed by the at least one processor, cause the performance of the sixth apparatus.

In some example embodiments, a seventh apparatus capable of performing any of the method 1300 (for example, the third apparatus 125 in FIG. 1) may comprise means for performing the respective operations of the method 1300. The means may be implemented in any suitable form. For example, the means may be implemented in a circuitry or software module. The seventh apparatus may be implemented as or included in the third apparatus 125 in FIG. 1.

In some example embodiments, the seventh apparatus comprises means for determining, resources to be used by a first apparatus 110 for performing a conditional handover (CHO) on a candidate cell provided by the third apparatus 125; and means for receiving a fifth message from a second apparatus 120 serving the first apparatus 110, the fifth message indicating the candidate cell to shift the resources to be used for performing the CHO on the candidate cell.

In some example embodiments, the first apparatus 110 is a terminal device and the second and third apparatus 130es are a network apparatus.

In some example embodiments, the seventh apparatus further comprises means for performing other operations in some example embodiments of the method 1300 or the third apparatus 125. In some example embodiments, the means comprises at least one processor; and at least one memory storing instructions that, when executed by the at least one processor, cause the performance of the seventh apparatus.

In some example embodiments, an eighth apparatus capable of performing any of the method 1400 (for example, the first apparatus 110) may comprise means for performing the respective operations of the method 1400. The means may be implemented in any suitable form. For example, the means may be implemented in a circuitry or software module. The eighth apparatus may be implemented as or included in the first apparatus 110 in FIG. 1.

In some example embodiments, the eighth apparatus comprises means for receiving, from a second apparatus 120, a connected discontinuous reception (C-DRX) configuration indicating at least one active duration; and means for in response to at least one active duration being overlapped with a positioning measurement gap, waking up to monitor control information at an end of the measurement gap, the control information indicating at least one pending transmission of the first apparatus 110.

In some example embodiments, the eighth apparatus further comprises: means for receiving, from the second apparatus 120, a fifth message indicating at least one of the following: a third indication indicates that the first apparatus 110 is allowed to wake up at the end of a measurement gap, or an ON-duration that follows the measurement gap.

In some example embodiments, the first apparatus 110 is a terminal device and the second apparatus 120 is a network apparatus.

In some example embodiments, the eighth apparatus further comprises means for performing other operations in some example embodiments of the method 1400 or the first apparatus 110. In some example embodiments, the means comprises at least one processor; and at least one memory storing instructions that, when executed by the at least one processor, cause the performance of the eighth apparatus.

In some example embodiments, a ninth apparatus capable of performing any of the method 1500 (for example, the second apparatus 120 in FIG. 1) may comprise means for performing the respective operations of the method 1500. The means may be implemented in any suitable form. For example, the means may be implemented in a circuitry or software module. The ninth apparatus may be implemented as or included in the second apparatus 120 in FIG. 1.

In some example embodiments, the ninth apparatus comprises means for transmitting, to a first apparatus 110, a connected discontinuous reception (C-DRX) configuration indicating at least one active duration; means for in response to an active duration of the at least one active duration being overlapped with a positioning measurement gap, transmitting control information indicating at least one pending transmission of the first apparatus 110 at an end of a measurement gap of the positioning measurement.

In some example embodiments, the ninth apparatus further comprises: means for transmitting, to the first apparatus 110, a configuration indicating at least one of the following: a third indication indicates that the first apparatus 110 is allowed to wake up at the end of a measurement gap, or an ON-duration that follows the measurement gap.

In some example embodiments, the first apparatus 110 is a terminal device and the second apparatus 120 is a network apparatus.

In some example embodiments, the ninth apparatus further comprises means for performing other operations in some example embodiments of the method 1500 or the second apparatus 120. In some example embodiments, the means comprises at least one processor; and at least one memory storing instructions that, when executed by the at least one processor, cause the performance of the ninth apparatus.

In some example embodiments, a tenth apparatus capable of performing any of the method 1600 (for example, the first apparatus 110 in FIG. 1) may comprise means for performing the respective operations of the method 1600. The means may be implemented in any suitable form. For example, the means may be implemented in a circuitry or software module. The tenth apparatus may be implemented as or included in the first apparatus in FIG. 1.

In some example embodiments, the tenth apparatus comprises means for receiving, from a second apparatus 120, a measurement configuration used for configuring a mobility measurement on a neighbor cell; means for performing a positioning measurement which conflicts with the mobility measurement on the neighbor cell; and means for relaxing a requirement of the mobility measurement on the neighbor cell.

In some example embodiments, the tenth apparatus further comprises: means for receiving, from the second apparatus 120, a sixth message indicating at least one of the following: a fourth indication indicating that the first apparatus 110 is allowed to relax the requirement of the mobility measurement on the neighbor cell if the mobility measurement is conflicts with the positioning measurement, or at least one parameter for relaxing the requirement.

In some example embodiments, the first apparatus 110 is a terminal device and the second apparatus 120 is a network apparatus.

In some example embodiments, the tenth apparatus further comprises means for performing other operations in some example embodiments of the method 1600 or the first apparatus 110. In some example embodiments, the means comprises at least one processor; and at least one memory storing instructions that, when executed by the at least one processor, cause the performance of the tenth apparatus.

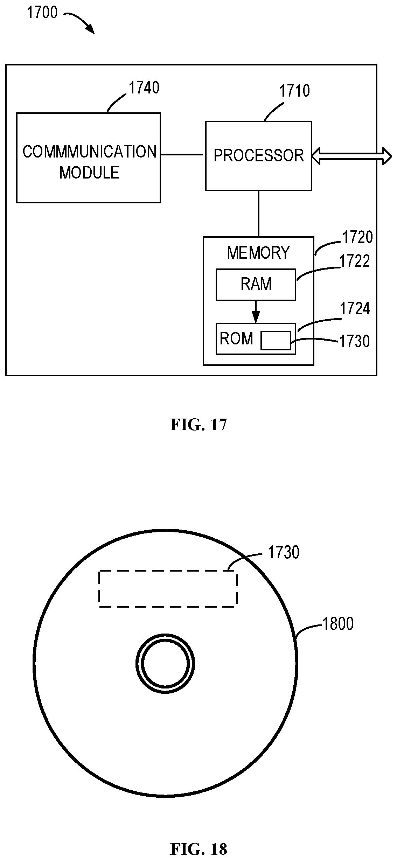

FIG. 17 is a simplified block diagram of a device 1700 that is suitable for implementing example embodiments of the present disclosure. The device 1700 may be provided to implement a communication device, for example, the first apparatus, the second apparatus 120 or the third apparatus 125 as shown in FIG. 1. As shown, the device 1700 includes one or more processors 1710, one or more memories 1720 coupled to the processor 1710, and one or more communication modules 1740 coupled to the processor 1710.

The communication module 1740 is for bidirectional communications. The communication module 1740 has one or more communication interfaces to facilitate communication with one or more other modules or devices. The communication interfaces may represent any interface that is necessary for communication with other network elements. In some example embodiments, the communication module 1740 may include at least one antenna.

The processor 1710 may be of any type suitable to the local technical network and may include one or more of the following: general purpose computers, special purpose computers, microprocessors, digital signal processors (DSPs) and processors based on multicore processor architecture, as non-limiting examples. The device 1700 may have multiple processors, such as an application specific integrated circuit chip that is slaved in time to a clock which synchronizes the main processor.

The memory 1720 may include one or more non-volatile memories and one or more volatile memories. Examples of the non-volatile memories include, but are not limited to, a Read Only Memory (ROM) 1724, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 1722 and other volatile memories that will not last in the power-down duration.

A computer program 1730 includes computer executable instructions that are executed by the associated processor 1710. The instructions of the program 1730 may include instructions for performing operations/acts of some example embodiments of the present disclosure. The program 1730 may be stored in the memory, e.g., the ROM 1724. The processor 1710 may perform any suitable actions and processing by loading the program 1730 into the RAM 1722.

The example embodiments of the present disclosure may be implemented by means of the program 1730 so that the device 1700 may perform any process of the disclosure as discussed with reference to FIG. 2 to FIG. 16. The example embodiments of the present disclosure may also be implemented by hardware or by a combination of software and hardware.

In some example embodiments, the program 1730 may be tangibly contained in a computer readable medium which may be included in the device 1700 (such as in the memory 1720) or other storage devices that are accessible by the device 1700. The device 1700 may load the program 1730 from the computer readable medium to the RAM 1722 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 18 shows an example of the computer readable medium 1800 which may be in form of CD, DVD or other optical storage disk. The computer readable medium 1800 has the program 1730 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computerexecutable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus, comprising:
at least one processor; and
at least one memory storing instructions that, when executed by the at least one processor, cause the first apparatus to:
determine a relationship between at least one of the following:
a completion time of a positioning measurement and an availability time of a serving cell of the first apparatus, or
a first time length of a duration for performing the positioning measurement and a second time length of a validity duration of an uplink synchronization parameter in the serving cell, the first time length being shorter than a third time length of a positioning measurement gap;
upon a completion of the positioning measurement, perform, based on the relationship, at least one of the following:
skipping a radio link failure (RLF) procedure in the serving cell;
performing a re-establishment procedure with a target cell;
performing a cell re-selection procedure;
stopping at least one access stratum (AS) operation which has been suspended due to performing the positioning measurement;
performing a mobility-related procedure;
starting to perform at least one mobility or positioning reference signal (PRS) measurement, a duration for performing the at least one mobility or PRS measurement being at least partially overlapped with the duration for performing the positioning measurement; or
resuming the at least one AS operation which has been suspended due to performing the positioning measurement.

2. The first apparatus of claim 1, wherein the first apparatus is further caused to:
upon the completion of the positioning measurement, perform at least one of the following: the skipping the RLF procedure in the serving cell, the performing the re-establishment procedure with a target cell, the performing the cell re-selection procedure, or the stopping the at least one AS operation, in accordance with at least one of the following:
a determination that the completion time of the positioning measurement is later than or equal to the availability time of the serving cell, or
a determination that the first time length is equal to or longer than the second time length.

3. The first apparatus of claim 1, wherein the first apparatus is further caused to:
upon the completion of the positioning measurement, perform at least one of the following: the starting to perform the at least one mobility or PRS measurement, the performing the mobility-related procedure or the resuming the at least one AS operation, in accordance with at least one of the following:
a determination that the completion time of the positioning measurement is earlier than or equal to the availability time of the serving cell, or
a determination that the first time length is longer than or equal to the second time length.

4. The first apparatus of claim 1, wherein the first apparatus is further caused to:
extend or shift the duration for performing the at least one mobility or PRS measurement.

5. The first apparatus of claim 1, wherein the first apparatus is further caused to:
after a completion of the at least one mobility or PRS measurement, transmit information indicating the remaining positioning validity duration to the second apparatus.

6. The first apparatus of claim 1, wherein the first apparatus is further caused to:
transmit, to the second apparatus, a notification indicating at least one of the following:
the at least one mobility measurement being shifted to the completion of the positioning measurement,
the duration for performing the at least one mobility measurement being extended,
the number of the at least one mobility measurement, or
time information required for performing the at least one mobility measurement.

7. The first apparatus of claim 1, wherein the first apparatus is further caused to:
transmit, to the second apparatus, a first message indicating at least one of the following:
a first positioning position fix time duration and an additional duration used for performing at least one mobility or PRS measurement, or
a second positioning position fix time duration which is determined based at least in part on the additional duration for performing the at least one mobility or PRS measurement.

8. The first apparatus of claim 1, wherein the first apparatus is further caused to:
receive, from the second apparatus, a second message indicating at least one of the following:
a first indication indicating that the first apparatus is allowed to perform the at least one mobility or PRS measurement upon the completion of the positioning measurement,
at least one parameter indicating an additional duration used for performing the at least one mobility or PRS measurement, or
an extended time length of the positioning measurement gap configured.

9. The first apparatus of claim 1, wherein the first apparatus is further caused to:
receive, from the second apparatus, a third message indicating at least one of the following:
contention-free random access channel (RACH) resources of the target cell,
RACH-less access resources of the target cell, or
a cell-radio network temporary identifier (C-RNTI) used for a physical random access channel (PRACH) transmission on the target cell.

10. The first apparatus of claim 1, wherein the first apparatus is further caused to:
determine the availability time of the serving cell based on at least one of the following:
a serving time of a second apparatus that provide the serving cell,
satellite assistance information of the second apparatus,
a location of the first apparatus,
a reference point of the serving cell, or
a coverage area of the serving cell.

11. The first apparatus of claim 1, wherein the validity duration of the uplink synchronization parameter is defined as a default value, configured by the second apparatus, or reported to the second apparatus by the first apparatus.

12. The first apparatus of claim 1, wherein the first apparatus is a terminal device and the second apparatus is a network apparatus.

13. A first apparatus, comprising:
at least one processor; and
at least one memory storing instructions that, when executed by the at least one processor, cause the first apparatus to:
receive, from a second apparatus, a fourth message to release the first apparatus to an idle state, the fourth message indicating at least one of the following:
a positioning-related cause indicating the first apparatus to perform a positioning measurement, or
a target or candidate cell for the first apparatus; and
upon a reception of the fourth message, transition in the idle state.

14. The first apparatus of claim 13, wherein the first apparatus is further caused to:
perform the positioning measurement after receiving the fourth message.

15. The first apparatus of claim 13, wherein the first apparatus is further caused to:
determine a time point to perform the positioning measurement based on an available time of the target cell.

16. The first apparatus of claim 13, wherein the first apparatus is a terminal device and the second apparatus is a network apparatus.

17. A second apparatus, comprising:
at least one processor; and
at least one memory storing instructions that, when executed by the at least one processor, cause the second apparatus to:
determine a relationship between at least one of the following:
a completion time of a positioning measurement and an availability time of a serving cell a first apparatus, or
a first time length of the positioning measurement and a second time length of a validity duration of an uplink synchronization parameter in the serving cell;
transmit a fourth message to release the first apparatus to an idle state in accordance with at least one of the following:
a determination that the completion time of the positioning measurement is later than or equal to the availability time of the serving, or
a determination that the first time length is equal to or longer than the second time length.

18. The second apparatus of claim 17, wherein the fourth message indicates at least one of the following:
a positioning-related cause indicating the first apparatus to perform a positioning measurement, or
a target or candidate cell for the first apparatus.

19. The second apparatus of claim 17, wherein the first apparatus is a terminal device and the second apparatus is a network apparatus.
